# EUROPEAN PATENT APPLICATION

(11) **EP 4 535 746 A1**
(43) Date of publication of application: **09.04.2025**
(21) Application number: 23830000.8
(22) Date of filing: 16.06.2023
(51) Int. Cl.: H04L 41/0896

(54) **DATA TRANSMISSION METHOD, AND GATEWAY DEVICE**

(30) Priority: 29.06.2022 CN 202210750558
(71) Applicant: Huawei Technologies Co., Ltd., Shenzhen, Guangdong 518129 (CN)
(72) Inventor: YIN, Xingfei, Shenzhen, Guangdong 518129 (CN); MENG, Wanhong, Shenzhen, Guangdong 518129 (CN); ZHOU, Hao, Shenzhen, Guangdong 518129 (CN)
(74) Representative: Gill Jennings & Every LLP
(86) International application number: PCT/CN2023/100640
(87) International publication number: WO 2024/001820

(57) **Abstract**

This application discloses a data transmission method and a gateway device that may be used in the data transmission field. The method includes: A first gateway device obtains a RoCEv2 packet to be sent to a second gateway device, generates a target request, and sends the target request to a network controller. The two gateway devices perform data transmission based on an SRv6 network. The network controller obtains a path computation result based on the target request, and returns the path computation result to the first gateway device. The path computation result includes a network path between the two gateway devices and a reserved network resource. The first gateway device extends the RoCEv2 packet based on the path computation result. An extended RoCEv2 packet carries a first identifier (representing each network node on the network path) and a second identifier (representing RDMA data). The network controller performs bandwidth assurance based on the second identifier and a QoS policy. An extended RoCEv2 packet is forwarded based on the network path. In this application, precise collaboration between RoCEv2 and the SRv6 network makes it possible to perform long-distance cross-domain RDMA transmission based on the SRv6 network, so that RDMA transmission no longer depends on an expensive leased line network.

## Description

This application claims priority to Chinese Patent Application No. 202210750558.6, filed with the China National Intellectual Property Administration on June 29, 2022 and entitled "DATA TRANSMISSION METHOD AND GATEWAY DEVICE", which is incorporated herein by reference in its entirety.

### TECHNICAL FIELD

This application relates to the data transmission field, and in particular, to a data transmission method and a gateway device.

### BACKGROUND

Remote direct memory access (remote direct memory access, RDMA) is a transmission technology born in data centers. After years of development, a relatively complete ecosystem has been formed in the data centers. In the high-performance computation, big data analysis, distributed storage, and database fields, there are high-performance solutions in which RDMA replaces the transmission control protocol (transmission control protocol, TCP).

Due to emergence of the remote direct memory access over converged Ethernet (RDMA over converged ethernet, RoCE) protocol, RDMA is freed from the dependency on an infiniband (infiniband, IB) network (RDMA is designed based on the IB network from the beginning and requires a dedicated switch, router, and network interface card to jointly form a dedicated IB network, and a responding mechanism of RDMA in terms of reliability is relatively single and simple because a high bandwidth, low latency, and zero packet loss of a transport network are ensured by using hardware resources). This greatly expands an application scope of an RDMA technology by using a good ecology of the Ethernet. The RoCE protocol has two versions: RoCEv1 and RoCEv2. A main difference is that RoCEv1 is an RDMA protocol implemented based on an Ethernet link layer (a switch needs to support a flow control technology such as priority-based flow control (priority-based flow control, PFC), to ensure reliable transmission at a physical layer), while RoCEv2 is implemented at a user datagram protocol (user datagram protocol, UDP) layer in the Ethernet transmission control protocol/Internet protocol (transmission control protocol/internet protocol, TCP/IP).

A protocol mechanism of RDMA has high deterministic service-level agreement (service-level agreement, SLA) requirements for a lower-layer bearer network, for example, a network bandwidth and latency. Therefore, RDMA cannot well adapt to non-data-center scenarios such as a wide area network and a metropolitan area network. As a result, an application ecosystem of RDMA can only be limited to the data centers.

### SUMMARY

Embodiments of this application provide a data transmission method and a gateway device. Through coordination of an interaction process of a RoCEv2 packet and an SRv6 network, long-distance cross-domain transmission of RDMA data based on the SRv6 network is implemented. An application scope of RDMA can be extended from a data center to the entire Internet, to implement accelerated processing of end-to-end data transmission through RDMA, so that RDMA transmission no longer depends on an expensive leased line network, thereby reducing engineering deployment costs and shortening a provision period. In addition, a current condition in which the SRv6 network cannot perceive an application demand is further changed, so that accurate optimal path planning can be completed for data at an application layer before the data enters the SRv6 network (that is, a path computation result is planned in advance before a RoCEv2 packet is sent). This resolves a problem in which post optimization can be performed only by using a monitoring technology, thereby reducing network management complexity and greatly improving user experience.

In view of this, embodiments of this application provide the following technical solutions.

According to a first aspect, an embodiment of this application first provides a data transmission method. The method may be applied in the data transmission field. The method includes: First, a first network interface card device, as a source end, generates a RoCEv2 packet based on to-be-sent RDMA data. Then, a first gateway device corresponding to the first network interface card device receives the RoCEv2 packet from the first network interface card device. The RoCEv2 packet is a packet to be sent by the first gateway device to a second gateway device. It should be noted that the first gateway device and the second gateway device perform data transmission based on an SRv6 network. The SRv6 network may be a wide area network, or may be a metropolitan area network. Specifically, a specific application type of the SRv6 network is not limited in this application. Then, the first gateway device generates a corresponding request based on the RoCEv2 packet, where the request may be referred to as a target request; and sends the target request to a network controller in the SRv6 network. Then, the network controller obtains a path computation result based on the received target request, and determines a quality of service (quality of service, QoS) policy based on the path computation result. The path computation result includes a network path (which may also be referred to as an SRv6 forwarding path) between the first gateway device and the second gateway device and a network resource reserved by the network controller for the RoCEv2 packet. The reserved network resource is a network resource of the RoCEv2 packet on the entire network path. After computing the path computation result based on the target request, the network controller may deliver the path computation result to the first gateway device. After obtaining the path computation result, the first gateway device extends the to-be-sent RoCEv2 packet based on the path computation result to obtain an extended RoCEv2 packet. The extended RoCEv2 packet carries at least a first identifier and a second identifier. The first identifier represents each network node on the network path, and the second identifier represents RDMA data corresponding to the RoCEv2 packet, so that the network controller performs bandwidth assurance based on the second identifier and the pre-computed QoS policy. Finally, the first gateway device sends the extended RoCEv2 packet to the peer second gateway device over the network path obtained through computation.

In the foregoing implementation of this application, through coordination of an interaction process of the RoCEv2 packet and the SRv6 network, long-distance cross-domain transmission of the RDMA data based on the SRv6 network is implemented. An application scope of RDMA can be extended from a data center to the entire Internet, thereby changing a deployment form of the RoCEv2 protocol and freeing RDMA from a constraint of being originally applied only to a data center internal network or a long-distance leased line network, so that RDMA transmission no longer depends on an expensive leased line network. According to the method in this application, RDMA can be carried on the SRv6 network, to implement accelerated processing of end-to-end data transmission, thereby reducing engineering deployment costs and shortening a provision period.

In a possible implementation of the first aspect, a process in which the first gateway device generates the target request based on the RoCEv2 packet may be: When the first gateway device determines that the RoCEv2 packet is a control packet that does not carry a payload field, that is, when the first gateway device determines that the RoCEv2 packet is a control packet, the first gateway device generates a first path computation request based on the control packet. The first path computation request is used to trigger the network controller to determine, for the control packet, a path computation result corresponding to the control packet. It should be noted that, in some implementations of this application, the first path computation request generated by the first gateway device may be sent to the network controller by using an edge-site management system. It should be further noted that the first path computation request may or may not carry a network performance requirement. This is not limited in this application.

In the foregoing implementation of this application, the following is specifically described: Whether the RoCEv2 packet is a control packet or a data packet may be determined based on whether the RoCEv2 packet carries the payload field, and the first gateway device correspondingly generates the first path computation request when the RoCEv2 packet is a control packet. This is flexible and targeted.

In a possible implementation of the first aspect, a process in which the first gateway device generates the target request based on the RoCEv2 packet may alternatively be: When the first gateway device determines that the RoCEv2 packet is a data packet that carries a payload field, that is, when the first gateway device determines that the RoCEv2 packet is a data packet, the first gateway device generates a second path computation request based on the data packet. Different from the first path computation request, the second path computation request needs to carry a network performance requirement. The second path computation request that carries the network performance requirement is used to request the network controller to determine a path computation result for the data packet based on the network performance requirement. It should be also noted that, in some implementations of this application, the second path computation request generated by the first gateway device may be sent to the network controller by using an edge-site management system.

In the foregoing implementation of this application, the following is specifically described: The first gateway device correspondingly generates the second path computation request when the RoCEv2 packet is a data packet, and the second path computation request needs to carry the network performance requirement. In this way, the SRv6 network can accurately perceive a feature of a size of the to-be-sent RDMA data at an application layer, and deduce the required network resource accordingly, so that accurate optimal path planning can be completed in advance for the RDMA data at the application layer before the RDMA data enters the SRv6 network. This resolves a problem in which post optimization can be performed only by using a monitoring technology, thereby reducing network management complexity and greatly improving user experience.

In a possible implementation of the first aspect, that the first gateway device generates, based on the data packet, the second path computation request that carries the network performance requirement may specifically include: When the data packet is a packet triggered by a send primitive operation, the first gateway device determines the needed network performance requirement based on a DMA length field in a RETH (RDMA extend transport header) header of the data packet. The RETH header is added before the payload field of the data packet by the first network interface card device corresponding to the first gateway device. The DMA length field in the RETH header represents a size of RDMA data corresponding to the data packet. On this basis, the first gateway device generates the second path computation request that carries the network performance requirement.

In the foregoing implementation of this application, when the data packet is the packet triggered by the send primitive operation, a corresponding message size of the to-be-transmitted RDMA data is also determined. However, there is no corresponding field for identifying the message size (message size) in the current packet. Therefore, the field needs to be added to the packet header to identify a size of a message to be sent in this send operation. Through optimization of the RoCEv2 protocol of the network interface card device, the data packet triggered by the send primitive operation may also carry the field to identify the message size of the RoCv2 data that needs to be sent in this operation. This may be implemented by reusing the RETH header defined in the IB specification. This is flexible and widely applicable.

In a possible implementation of the first aspect, that the first gateway device generates, based on the data packet, the second path computation request that carries the network performance requirement may alternatively specifically include: When the data packet is a packet triggered by a write primitive operation or a read primitive operation, the first gateway device first determines the network performance requirement based on a DMA length field in a RETH header of the data packet, and then the first gateway device generates the second path computation request that carries the network performance requirement. It should be noted that, when the data packet is a packet triggered by the write primitive operation, a size of a message that needs to be transmitted in this operation is indicated by using a DMA length field in a RETH (RDMA extend transport header) header of an initial packet (that is, a first packet, where one piece of RDMA data may be split into n data packets, and a message size corresponding to the RDMA data is carried in only the first packet, and another subsequent data packet corresponding to the RDMA data is sent based on a network path the same as that of the initial packet). Similarly, when the data packet is a packet triggered by the read primitive, the network performance requirement is carried in a read request packet, and a requester triggers path computation of a reverse forwarding path that uses a responder as a start node. When the responder receives the read request request and replies with a read response, the responder may reply with a plurality of response packets. All packets need to be forwarded along pre-computed paths. Therefore, in this case, the first gateway device may determine the network performance requirement based on the DMA length field in the RETH header of the data packet, to generate the second path computation request that carries the network performance requirement.

In the foregoing implementation of this application, when the data packet is the packet triggered by the write primitive operation or the read primitive operation, the size of the message that needs to be transmitted in this operation is indicated by using the DMA length field in the RETH header of the initial packet, and the network performance requirement may be directly determined based on the DMA length field. This is simple, convenient, and implementable.

In a possible implementation of the first aspect, that the first gateway device extends the RoCEv2 packet based on the path computation result to obtain the extended RoCEv2 packet may be specifically: The first gateway device modifies an IPv6 Hop-by-Hop Option of an IPv6 header of the RoCEv2 packet based on the path computation result, to obtain the extended RoCEv2 packet.

In the foregoing implementation of this application, through format extension of the RoCEv2 packet, the RoCEv2 packet can carry the size of the to-be-transmitted data at the application layer and a forwarding path identifier. In this way, after RDMA traffic enters the SRv6 network, a mature QoS capability of a wide area network/metropolitan area network can be used to ensure committed transmission bandwidth assurance.

In a possible implementation of the first aspect, the data transmission method based on the SRv6 network may further include the following steps: First, the first gateway device obtains a backup path. The backup path may be referred to as a first backup path. The first backup path may be triggered to be generated when the network controller receives the target request. Then, the first gateway device duplicates the RoCEv2 packet to obtain a first duplicated packet. The first gateway device extends the first duplicated packet based on the first backup path in a manner similar to the foregoing process to obtain an extended first duplicated packet. The extended first duplicated packet still needs to carry an SRv6 forwarding path identifier. The SRv6 forwarding path identifier carried in the extended first duplicated packet may be referred to as a third identifier. The third identifier represents each network node on the first backup path. Finally, the first gateway device sends the extended first duplicated packet to the second gateway device over the first backup path, so that the second gateway device performs dual fed and selective receiving processing on the extended RoCEv2 packet and the extended first duplicated packet. A manner of the dual fed and selective receiving processing may be: reserving a first received packet, and directly discarding a later received packet. For example, if the extended RoCEv2 packet arrives at the second gateway device first, the extended RoCEv2 packet is kept, and the extended first duplicated packet that arrives at the second gateway device later is discarded. A reverse case is similar. Details are not described herein.

In the foregoing implementation of this application, for all RoCEv2 packets, in addition to transmission optimization processing based on different packet types, the first gateway device further needs to additionally duplicate a RoCEv2 packet, and complete multi-sending and selective receiving processing of the RoCEv2 packet based on a backup path, to improve an anti-packet loss capability during network transmission and avoid a packet loss problem in a traffic redundancy manner.

In a possible implementation of the first aspect, an alternative solution of RoCEv2 anti-packet loss processing is further provided. A main difference is that, in this embodiment of this application, packet duplication is not performed at an RDMA gateway, but duplication processing of the RoCEv2 packet is completed by a head network node of the SRv6 network. Specifically, the process may be as follows: When the extended RoCEv2 packet is sent to the head network node of the network path (the head network node may also be referred to as a source network node, that is, a network node that is on the network path and that is directly connected to the first gateway device, and a first network node on the network path along a data transmission direction), the head network node is triggered to duplicate the extended RoCEv2 packet to obtain a second duplicated packet. The second duplicated packet is sent over a pre-prepared backup path (which may be referred to as a second backup path). Finally, a tail network node of the network path (the tail network node may also be referred to as a destination network node, that is, a network node that is on the network path and that is directly connected to the second gateway device, and a last network node on the network path along the data transmission direction) performs dual fed and selective receiving processing on the extended RoCEv2 packet and the second duplicated packet. The second backup path may also be triggered to be generated when the network controller receives the target request.

In the foregoing implementation of this application, the gateway device in this embodiment of this application does not need to implement anti-packet loss processing of dual fed and selective receiving. Implementation of this capability is provided by a network node in the SRv6 network, so that forwarding pressure of the gateway device can be reduced.

In a possible implementation of the first aspect, that the first gateway device sends the extended RoCEv2 packet to the second gateway device over the network path may alternatively be: When the reserved network resource does not satisfy a network performance requirement of the extended RoCEv2 packet, the first gateway device performs source-end rate limiting by using a flow control mechanism, and sends the extended RoCEv2 packet to the second gateway device over the network path.

In the foregoing implementation of this application, when a network resource for network transmission cannot satisfy a requirement, an optimal SRv6 forwarding path in a current case may be further selected, and the first gateway device is notified of a size of a network resource allocated for this transmission, so that the first gateway device performs reduced-rate sending at a source end by using the flow control mechanism, to reduce congestion and avoid a packet loss, thereby improving transmission reliability.

In a possible implementation of the first aspect, it is assumed that IPv4 private network addresses are deployed on the first network interface card device corresponding to the first gateway device and the second network interface card device corresponding to the second gateway device. In this case, a manner in which the first gateway device obtains the RoCEv2 packet to be sent to the second gateway device may be: The first network interface card device generates an original RoCEv2 packet based on the to-be-sent RDMA data, and then the first gateway device performs IPv4 over IPv6 tunnel encapsulation on the original RoCEv2 packet to obtain the RoCEv2 packet.

In the foregoing implementation of this application, the following is specifically described: When the IPv4 private network address is deployed on the network interface card device, the corresponding gateway device further needs to have an IPv4 over IPv6 tunnel encapsulation capability, so that the network interface card device deployed in a user private network can implement a function of mutual communication across a wide area network/metropolitan area network. This is implementable.

In a possible implementation of the first aspect, a process in which the first gateway device obtains the RoCEv2 packet to be sent to the second gateway device may alternatively be: The first gateway device first receives a target packet that is sent by the first network interface card device and that is to be sent to the second gateway device, and then the first gateway device determines, based on a UDP destination port number in the target packet, that the target packet is the RoCEv2 packet. The first network interface card device corresponds to the first gateway device.

In the foregoing implementation of this application, because the first gateway device may receive various packets transmitted by the first network interface card device, a manner in which the first gateway device determines whether the received target packet is the RoCEv2 packet is as follows: determining, based on a UDP destination port number in the received target packet, whether the currently received target packet is the RoCEv2 packet. This is operable.

In a possible implementation of the first aspect, the reserved network resource includes at least any one of the following: a network bandwidth and minimum network latency.

In the foregoing implementation of this application, a typical type of the reserved network resource in this application is specifically described. This is widely applicable.

According to a second aspect, an embodiment of this application provides a gateway device. The gateway device serves as a first gateway device. The gateway device has a function of implementing the method in the first aspect or any possible implementation of the first aspect. The function may be implemented by hardware, or may be implemented by hardware executing corresponding software. The hardware or the software includes one or more modules corresponding to the function.

According to a third aspect, an embodiment of this application provides a gateway device. The gateway device serves as a first gateway device, and may include a storage, a processor, and a bus system. The storage is configured to store a program. The processor is configured to invoke the program stored in the storage, to perform the method in the first aspect or any possible implementation of the first aspect of embodiments of this application.

According to a fourth aspect, an embodiment of this application provides a computer-readable storage medium. The computer-readable storage medium stores instructions. When the instructions are run on a computer, the computer is enabled to perform the method in the first aspect or any possible implementation of the first aspect.

According to a fifth aspect, an embodiment of this application provides a computer program. When the computer program is run on a computer, the computer is enabled to perform the method in the first aspect or any possible implementation of the first aspect.

According to a sixth aspect, an embodiment of this application provides a chip. The chip includes at least one processor and at least one interface circuit. The interface circuit is coupled to the processor. The at least one interface circuit is configured to: perform sending and receiving functions, and send instructions to the at least one processor. The at least one processor is configured to run a computer program or the instructions, and has a function of implementing the method in the first aspect or any possible implementation of the first aspect, or has a function of implementing the method in the second aspect or any possible implementation of the second aspect. The function may be implemented by hardware, or may be implemented by software, or may be implemented by a combination of hardware and software. The hardware or the software includes one or more modules corresponding to the function. In addition, the interface circuit is configured to communicate with another module other than the chip.

### BRIEF DESCRIPTION OF DRAWINGS

FIG. 1 is a diagram of a working procedure of an SRv6 TE policy according to an embodiment of this application;
FIG. 2 is a diagram of an application scenario according to an embodiment of this application;
FIG. 3 is a diagram of a general model of a current processing solution according to an embodiment of this application;
FIG. 4 is a diagram of an application scenario according to an embodiment of this application;
FIG. 5 is a diagram of application of a system architecture according to an embodiment of this application;
FIG. 6 is another diagram of application of a system architecture according to an embodiment of this application;
FIG. 7 is a schematic flowchart of a data transmission method according to an embodiment of this application;
FIG. 8 is a schematic flowchart of a network initialization processing phase according to an embodiment of this application;
FIG. 9 is a diagram of a packet header change status when a RoCEv2 packet passes through each network node on a network path according to an embodiment of this application;
FIG. 10 is a diagram of a format definition according to an embodiment of this application;
FIG. 11 is a diagram of a structure of each component in a data transmission method according to an embodiment of this application;
FIG. 12 is a diagram of a structure of a first gateway device according to an embodiment of this application; and
FIG. 13 is a diagram of another structure of a first gateway device according to an embodiment of this application.

### DESCRIPTION OF EMBODIMENTS

Embodiments of this application provide a data transmission method and a gateway device. Through coordination of an interaction process of a RoCEv2 packet and an SRv6 network, long-distance cross-domain transmission of RDMA data based on the SRv6 network is implemented. An application scope of RDMA can be extended from a data center to the entire Internet, to implement accelerated processing of end-to-end data transmission through RDMA, so that RDMA transmission no longer depends on an expensive leased line network, thereby reducing engineering deployment costs and shortening a provision period. In addition, a current condition in which the SRv6 network cannot perceive an application demand is further changed, so that accurate optimal path planning can be completed for data at an application layer before the data enters the SRv6 network (that is, a path computation result is planned in advance before a RoCEv2 packet is sent). This resolves a problem in which post optimization can be performed only by using a monitoring technology, thereby reducing network management complexity and greatly improving user experience.

In this specification, claims, and the accompanying drawings of this application, the terms "first", "second", and the like are intended to distinguish similar objects but do not necessarily indicate a specific order or sequence. It should be understood that the terms used in such a way are interchangeable in appropriate circumstances, and this is merely a discrimination manner for describing objects having a same attribute in embodiments of this application. In addition, the terms "include", "contain", and any other variants mean to cover the non-exclusive inclusion, so that a process, method, system, product, or device that includes a series of units is not necessarily limited to those units, but may include other units not expressly listed or inherent to such a process, method, product, or device.

Embodiments of this application relate to a lot of network-related knowledge. To better understand solutions in embodiments of this application, the following first describes related terms and concepts that may be included in embodiments of this application. It should be understood that related concept explanation may be limited due to specific situations of embodiments of this application, but this does not mean that this application is limited to only these specific situations, and specific situations of different embodiments may differ. This is not specifically limited herein.

### (1) Segment routing IPv6 (segment routing IPv6, SRv6)

SRv6 means segment routing based on an IPv6 forwarding plane (SR+IPv6). To be specific, SRv6 implements network programmability by using a flexible IPv6 extension header based on an existing IPv6 forwarding technology.

SRv6 is a next-generation IP bearer protocol that can simplify and unify conventional complex network protocols, and is the basis for constructing intelligent IP networks in 5G and the cloud era. SRv6 combines source routing advantages of SR and simplicity and scalability of IPv6. In addition, SRv6 has a plurality of programming spaces and complies with a (software-defined network, software-defined network) idea. SRv6 is a powerful means for implementing intent-driven networks. A strong network programming capability of SRv6 can better satisfy requirements of new network services. Compatibility of SRv6 with IPv6 makes deployment of network services easier.

SRv6 has two working modes: respectively, an SRv6 traffic engineering (segment routing IPv6 traffic engineering, SRv6 TE) policy and an SRv6 best effort (segment routing IPv6 best effort, SRv6 BE) policy. The SRv6 BE policy is obtaining an optimal SRv6 path through computation according to a shortest path algorithm. The SRv6 TE policy is a new tunnel traffic diversion technology developed based on the SRv6 technology. An SRv6 TE path is represented as a segment list (segment list) of a specified path, which is referred to as a segment identifier list or an SID list (segment ID list) for short. Each SID list is an end-to-end path from a source to a destination, and indicates a device in a network to follow a specified path instead of a shortest path computed according to the interior gateway protocol (interior gateway protocol, IGP). If a data packet is diverted into an SRv6 TE path, the SID list is added to the data packet by a head end, and another device in the network executes an instruction inserted in the SID list. Compared with an SRv6 BE policy, the SRv6 TE policy can better respond to differentiated service requirements by using a traffic engineering technology and implement service-driven networks. The SRv6 TE policy is applicable to scenarios in which a service has a strict requirement on network SLA.

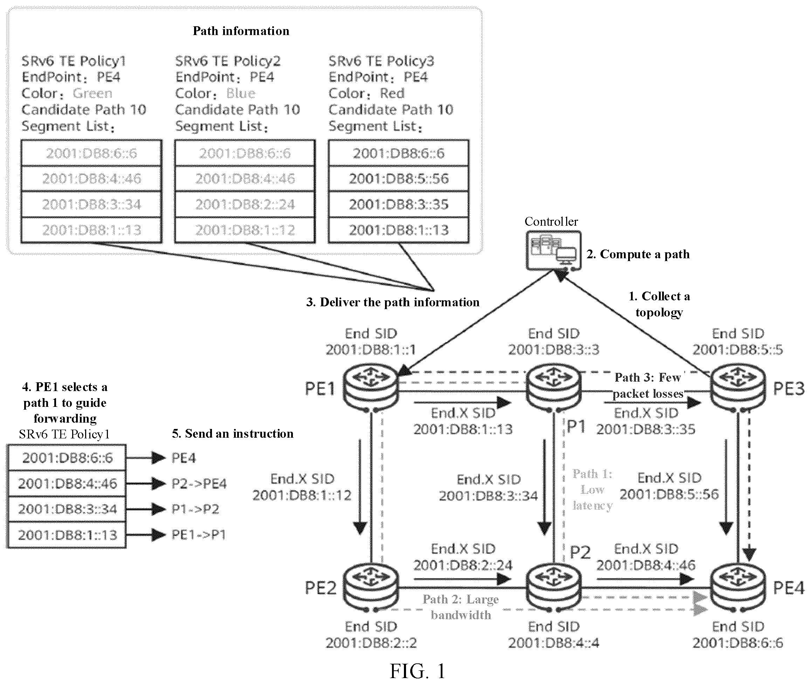

Specifically, as shown in FIG. 1, a working procedure of the SRv6 TE policy may be mainly summarized into five steps:
① A repeater reports network topology information to a network controller. The topology information includes node and link information, and traffic engineering (traffic engineering, TE) attributes such as a link cost, a bandwidth, and latency.
② The controller computes, based on the collected topology information and according to a service requirement, a path satisfying service SLA.
③ The controller delivers path information to a head node of the network (that is, a node accessed by a source-end device, where the node is also referred to as a source node) by using a border gateway protocol (border gateway protocol, BGP) SR-Policy extension, and the head node generates SRv6 TE. The generated SRv6 TE policy includes key information such as a head-end address, a destination address, and a color.
④ The head node of the network selects appropriate SRv6 TE for a service to guide forwarding.
⑤ During data forwarding, the repeater needs to execute an SID instruction released by the repeater.

However, it should be noted that in the SRv6 TE policy, path computation is performed based on a network topology and a status, and a status and a requirement of an application are not perceived. Therefore, path selection cannot be strictly and accurately performed according to an actual bandwidth requirement of the application. Application traffic can be only scheduled to a currently most appropriate path. Monitoring and detection means need to be further used to detect an exception and perform path optimization and scheduling.

### (2) Remote direct memory access (remote direct memory access, RDMA)

With upgrade of data center networks, a bandwidth increases from 1 Gbps to 10 Gbps and then to 40 Gbps/100 Gbps, and basic round-trip latency decreases from hundreds of microseconds to several microseconds. Although a conventional TCP-based transmission technology has been optimized, the conventional TCP-based transmission technology cannot satisfy an expected performance requirement of a high-speed and low-latency data center network. Therefore, the RDMA technology emerges.

RDMA is a direct memory access technology by using which a capability of directly accessing a remote memory based on a network through registration and binding of a network interface card and a memory is provided, and data is transmitted from a memory of a local computer device to a remote computer device without requiring operating systems (operating systems, OSs) of the two computer devices. In this case, no impact is caused on the OSs of the two computer devices, and therefore, a processing function of the computer does not need to be used that much. Based on RDMA, all processing logic is completed in a user mode, overheads of external memory duplication and context switching are eliminated. Therefore, a memory bandwidth and a CPU cycle can be released to improve performance of an application system. In this way, RDMA has features of a high bandwidth, low latency, and a low CPU load.

Currently, there are approximately three types of RDMA networks: an IB network, a RoCE network, and the Internet wide area RDMA protocol (internet wide area rdma protocol, iWARP). The IB network is a network specially designed for RDMA, and ensures reliable transmission at a hardware level. RoCE and iWARP both are Ethernet-based RDMA technologies and support corresponding verbs interfaces. The RoCE protocol has two versions: RoCEv1 and RoCEv2.

### (3) Network interface card (network interface card, NIC) device

The network interface card device may be referred to as a network interface card for short and also referred to as a network adapter, and is computer hardware designed to allow a computer to communicate on a computer network. Because the network interface card device has a media access control (media access control, MAC) address, the network interface card device is between Layer 1 and Layer 2 of the open systems interconnection (open systems interconnection, OSI) model. The network interface card device allows users to be connected to each other through a cable or a wireless network.

It should be noted that, in embodiments of this application, in addition to a common network interface card, the network interface card may further include a data processing unit (data processing unit, DPU), a smart network interface card (smart network interface card), an RDMA network interface card, or a device with a network interface card function in another form. This is not specifically limited in this application. For example, the RDMA network interface card is configured to: receive a remote memory access request from a central processing unit (central processing unit, CPU), and send the remote memory access request to a network; or receive a remote memory access request from a network, access a host memory via a direct memory access (direct memory access, DMA) engine, and finally return an access result to an initiator via a network. In embodiments of this application, because to-be-sent data is RDMA data, a used network interface card may be an RDMA network interface card (RDMA NIC, RNIC).

### (4) Gateway (gateway) device

The gateway device may be referred to as a gateway for short and also referred to as an inter-network connector or a protocol converter, and is a computer system or device that provides a data conversion service between a plurality of networks. The gateway is a translator between two systems that use different communication protocols, data formats or languages, or even totally different architectures. The gateway newly packs received information to adapt to a requirement of a destination system. In addition, the gateway implements functions of filtering and security. In embodiments of this application, a gateway based on RDMA data may be referred to as an RDMA gateway (RDMA gateway, RGW).

The gateway works at a transport layer and all layers above the transport layer in an open systems interconnection reference model (open systems interconnection reference model, OSI/RM). The gateway newly encapsulates information so that the information can be processed by another system. For this, the gateway needs to be able to communicate with various applications. This includes establishing and managing a session, transmitting and parsing data, and the like. Actually, the current gateway cannot be completely classified as network hardware, but can be summarized as a combined product of software and hardware that can connect different networks.

It should be noted that the SRv6 network-based data transmission method provided in embodiments of this application may be deployed on an existing gateway device (that is, coupled to an existing gateway device), or may be independently deployed as a dedicated gateway device (that is, decoupled from an existing gateway device). This is not limited in this application.

### (5) Infiniband (infiniband, IB)

The IB is a computer-networking communication standard used in high-performance computing, features very high throughput and very low latency, and is used for data interconnection both among and within computer devices.

### (6) Network leased line

The network leased line is a dedicated channel provided by a network service provider for users, so that data transmission of the user becomes reliable and trustworthy. Advantages of the leased line are good security and guaranteed QoS. The network leased line has the following two channel modes:
a. Physical dedicated channel: The physical dedicated channel is a dedicated line set between a service provider and a user. The line is used only by the user independently and other data cannot enter the line. A common line allows a plurality of users to share a channel.
b. Virtual dedicated channel: The virtual dedicated channel reserves a specific bandwidth for a user on a common channel, so that the user can exclusively use the bandwidth. This is similar to setting a path on a public channel to be used only by a corresponding user only. In addition, user data is encrypted, to ensure reliability and security.

With development of information technologies, a data center (such as a public cloud/private cloud data center or a supercomputing data center) becomes a computing power concentration point. Enterprises need to construct applications based on data centers to use strong computing power of these data centers. In common scenarios, data and computing power are concentrated in the data centers.

With gradual improvement of digitalization of enterprise production, massive data is generated in this process. The data is usually distributed outside the data centers and may be hundreds of thousands of kilometers away from each other geographically. Data processing requirements may be usually classified into two types: One type is a "T+0" computing type that requires real-time processing. In this type, a data volume is not large but a real-time processing requirement is high. A processing result may need to be fed back to a production system for real-time control. The other type is a "T+1" computing type that does not require real-time processing. In this type, a data volume is large and there is no real-time requirement; but the faster the better.

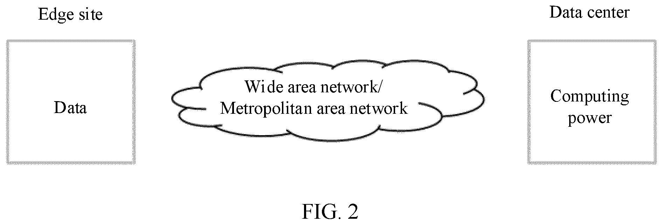

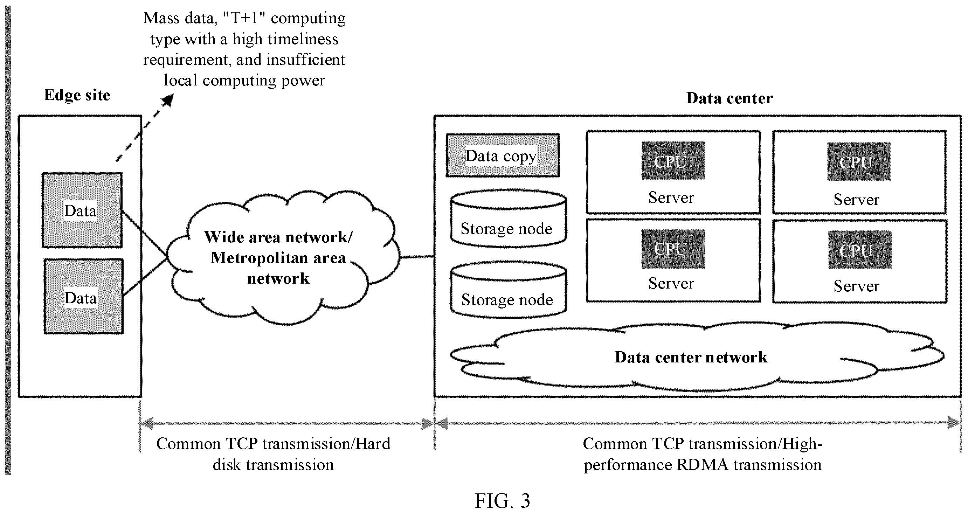

An embodiment of this application mainly focuses on a problem in which massive data is generated on a terminal side, local computing power is insufficient, and data centers need to be used to centralize computing power to complete a "T+1" type computing request, as shown in FIG. 2. This type of computing request is widely applied in various industries such as seismic exploration data processing in the energy industry, gene sequencing data processing in the medical industry, 3D rendering and video image data processing in the media industry, and high-energy physics and meteorological data analysis and processing in the scientific research field. Scenario requirements and current processing solutions of these industries may be abstracted as a general model shown in FIG. 3. From the perspective of a network (for example, a wide area network), data needs to pass through a wide area network (for example, an SRv6 network) and a data center network from a terminal end to a data center. From the perspective of data transmission, data first passes through the wide area network and arrives at a storage node in the data center in a TCP transmission manner or a hard disk transmission manner, and the data exists in the storage node in a data copy manner. Then, a computing node reads the data from the storage node over a data center network based on TCP or a high-performance RDMA technology, to complete data processing. The current solution faces the following challenges:
a. Data security problem: The data may be leaked due to various exceptions during data copy.
b. Data consistency problem: The data may be inconsistent with copied data due to a data update on a source end.
c. Data timeliness problem: Timeliness of data processing is reduced due to time consumption in hard disk transmission and a low throughput of TCP transmission on the wide area network.

The industry expects to transplant RDMA to the Ethernet for application in view of mature application of RDMA in the high-performance transmission solution of data centers. However, RDMA is designed based on an IB network from the beginning and requires a dedicated switch, router, and network interface card to jointly form a dedicated IB network. A responding mechanism of RDMA in terms of reliability is relatively single and simple because a high bandwidth, low latency, and zero packet loss of a transport network are ensured by using hardware resources. After RDMA is transplanted to the Ethernet, a feature requirement of the IB network is also brought to the Ethernet, especially a lossless feature requirement. In this case, the Ethernet that originally provides a best-effort service needs to perform capability adaptation by using a complex flow control mechanism (such as global pause (global pause) and power factor correction (power factor correction, PFC)) or congestion control (such as explicit congestion notification (explicit congestion notification, ECN) and data center quantized congestion notification (data center quantized congestion notification, DCQCN)). In general, RDMA has the following problems in Ethernet-based transmission:
a. Scalability: RDMA has poor scalability, is applicable only to a closed intranet, and cannot be deployed across regions.
b. Packet loss processing: Limited by hardware resources, the RDMA network interface card uses Go-back-N extensive retransmission processing, and is very sensitive to a packet loss. An abnormal packet loss causes a sharp decrease in transmission efficiency. Therefore, a method needs to be used to avoid a packet loss on a network.
c. Requirement for a network device: To implement a lossless network with no packet loss, a switch needs to cooperate (the IB network requires a dedicated switch, the RoCE requires a switch to support PFC, ECN, and the like).

The industry also attempts to explore application of RDMA in a long-distance network. For example, RDMA can implement wide area transmission based on a high-quality feature of the network leased line. Compared with a data center scenario, RDMA based on the leased line deteriorates only in terms of latency and can reach same levels in terms of other network service parameters. Although network leased line can provide a high-quality bearer service, there are the following problems:
a. The network leased line has a high lease cost, and there are many restrictions and limitations on provision deployment.
b. The network leased line has a very long provision period, and professional personnel of a network service provider needs to perform management and maintenance.
c. Leased line services of different network service providers may not be interconnected.

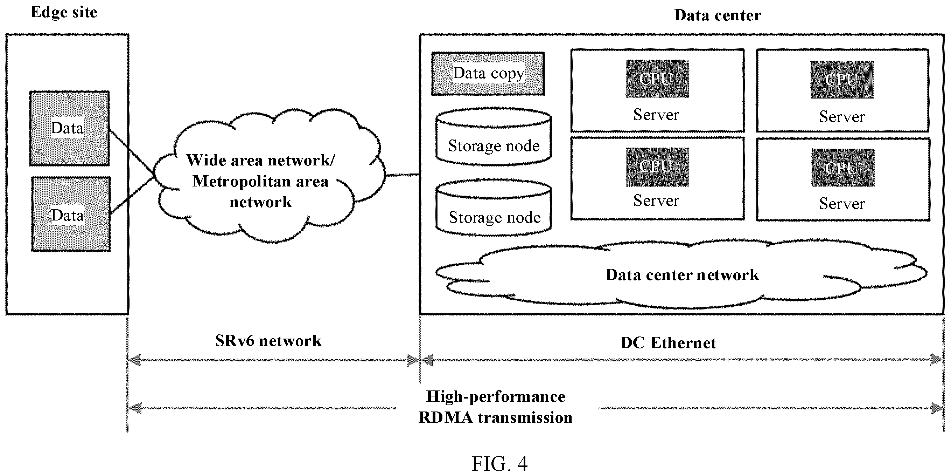

On this basis, in this application, the foregoing problem is resolved through end-to-end RDMA high-performance transmission by designing a wide area network/metropolitan area network that can bear RDMA transmission. In consideration of cost control and deployment efficiency of an engineering application, this application focuses on resolving a problem of reliable transmission of RDMA by using the SRv6 technology on the wide area network/metropolitan area network. A specific application scenario may be shown in FIG. 4. According to the method provided in this application, an existing RDMA application scope may be extended from a data center to an entire Internet, and accelerated processing of end-to-end data transmission is implemented by using the RDMA technology. The following problems are mainly resolved:
a. How does the gateway device recognize (for example, perform recognition by using an RDMA transmission processing layer) and classify RDMA data (also referred to as RDMA traffic), accurately perceive network performance (such as a bandwidth and latency) requirements of different RMDA data transmission through refined management, then collaborate with the SRv6 network to perform precise path computation based on the network performance requirements and a real-time link status of the SRv6 network, and feed back a path computation result to the gateway device?
b. How does the gateway device collaborate with a network node (for example, a wide area router) in the SRv6 network to divert different RDMA data to the corresponding SRv6 TE policy and implement precise bandwidth assurance by using the network node in the network, based on the path computation result (for example, by using the RDMA transmission processing layer)?

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

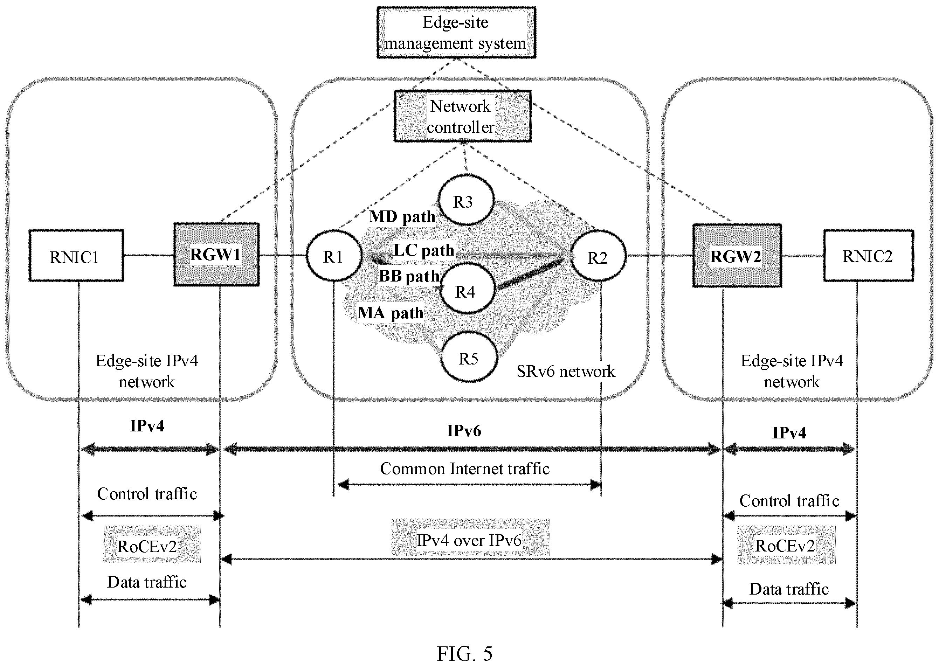

First, a system architecture provided in an embodiment of this application is described. For details, refer to FIG. 5. FIG. 5 is a diagram of application of a system architecture according to an embodiment of this application. This embodiment of this application is mainly applied in a scenario in which an RDMA network interface card (RDMA network interface card, RNIC) device located on the terminal side needs to cross the SRv6 network. The RDMA network interface card device may be collectively referred to as a network interface card device. IPv4 private network addresses or IPv6 addresses may be deployed on a source-end network interface card device and a destination-end network interface card device. The source-end network interface card device and the destination-end network interface card device interact with each other according to the RoCEv2 protocol. The SRv6 network usually includes a network controller (for example, a wide area network controller) and a plurality of routing devices, for example, RGW1, RGW2, R3, R4, and R5 shown in FIG. 5. The routing device may also be referred to as a network node. The network controller manages all network nodes in the corresponding SRv6 network, and is responsible for path computation processing of the SRv6 network. As shown in FIG. 5, it is assumed that the network controller has computed four SRv6 TE policy paths based on a network status. The four paths are respectively represented as an MD (min delay) path, an LC (least cost) path, a BB (bandwidth balance) path, and an MA (max availability) path. The MD path represents a minimum delay path, the LC path represents a least cost path, the BB path is a bandwidth balance path, and the MA path is a maximum availability path. When the RDMA traffic passes through the SRv6 wide area network, the SRv6 wide area network carries common Internet traffic (that is, traffic other than RoCEv2 data) and RoCEv2 traffic.

It should be noted that, in this embodiment of this application, the IPv4 private network addresses or the IPv6 addresses may be deployed on the source-end network interface card device and the destination-end network interface card device. This is not specifically limited in this application.

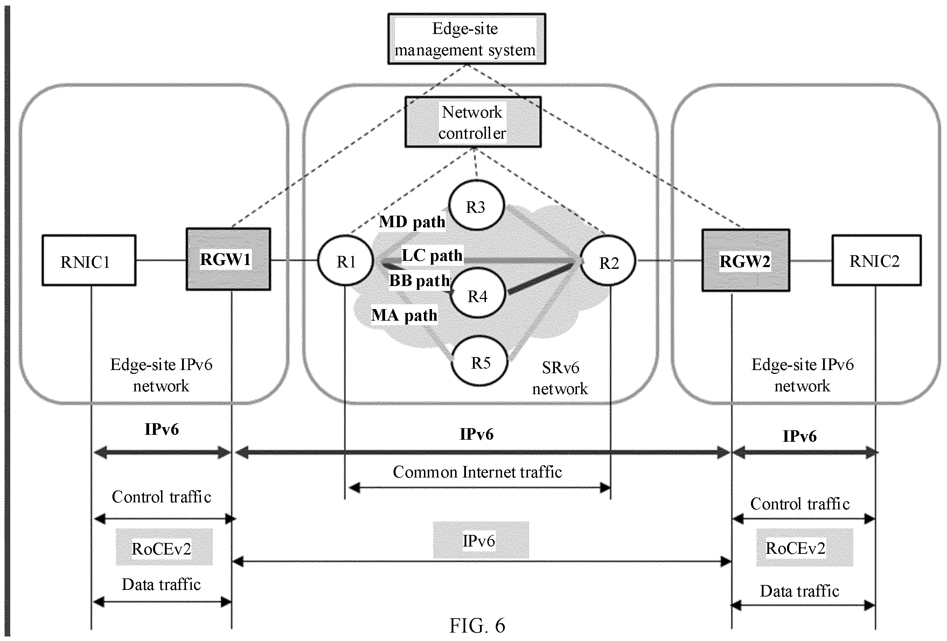

However, it should be noted that, if the IPv4 private network addresses are deployed on the source-end network interface card device and the destination-end network interface card device, the source-end network interface card device and the destination-end network interface card device need to provide an IPv4 over IPv6 tunneling capability for gateway devices respectively corresponding to the source-end network interface card device and the destination-end network interface card device. In other words, the gateway device needs to perform IPv4 over IPv6 tunnel encapsulation for a packet sent by the network interface card device, so that an RNIC deployed in a user private network can perform communication across the wide area network. This is shown as a transmission process in FIG. 5. If the IPv6 addresses are deployed on the source-end network interface card device and the destination-end network interface card device, the gateway device does not need to perform IPv4 over IPv6 tunnel encapsulation on a packet sent by the network interface card device, and the network interface card device directly runs the RoCEv2 protocol based on IPv6. Routing between network interface card devices that communicate with each other is reachable across the SRv6 network. This is shown as a transmission process in FIG. 6. Advantages of this manner are as follows: The gateway device does not need to provide the IPv4 over IPv6 tunnel encapsulation capability, the IPv6 protocol runs on the entire network, a unified protocol stack technology is used, and networking is simpler and clearer. Different local area addresses are deployed on the gateway devices. In this embodiment of this application, other processing processes are similar. For details, refer to subsequent implementations. For ease of description, an example in which the IPv4 private network addresses are deployed on the source-end network interface card device and the destination-end network interface card device is used for description in subsequent embodiments.

In this application, an RDMA gateway (RDMA gateway, RGW) device is used to implement the SRv6 network-based data transmission method. In an overall solution, a corresponding edge-site management system may be used in combination to complete collaboration with the SRv6 network. All RGWs in a preset range may correspond to one edge-site management system, and are managed by the edge-site management system. A range of RGWs that can be managed by the edge-site management system is deployed and defined in advance. Details are not described herein. The RGW is usually deployed at an egress location of a user network. A local area network (local area network, LAN) side is connected to an RNIC, and a wide area network (wide area network, WAN) side is connected to a network node in the SRv6 network. All traffic sent by the RNIC is listened to and classified by an egress gateway RGW, so that the RDMA traffic (which may be classified into control traffic and data traffic in this embodiment of this application) can be matched to respective SRv6 forwarding paths according to respective required network performance (for example, a bandwidth and latency) requirements, thereby implementing deterministic SLA assurance when the RDMA traffic is forwarded in the wide area network/metropolitan area network.

It should be noted that, in some other implementations of this application, an edge-site management system may alternatively be not needed, but a module with a corresponding function is deployed on each RGW to implement a function of the edge-site management system. This is not specifically limited in this application. For ease of description, in the following embodiment of this application, an example in which the edge-site management system is deployed is used for description.

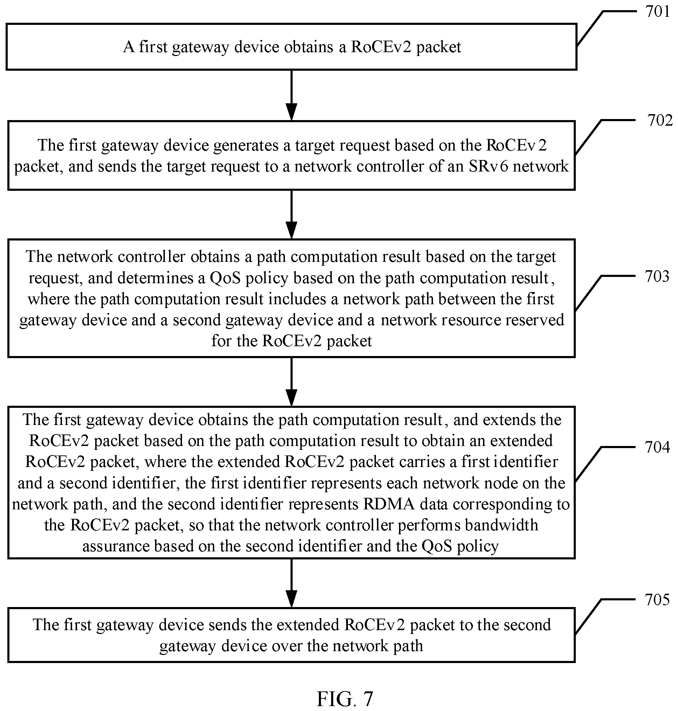

Then, the SRv6 network-based data transmission method provided in embodiments of this application is described. A core of embodiments of this application is mainly as follows: how to complete collaboration between the RoCEv2 protocol and the SRv6 network by using the RDMA gateway device, to implement processing of path planning in advance and strict post QoS assurance based on a network performance requirement such as a precise bandwidth/latency required for RDMA data transmission, thereby implementing deterministic transmission of a RoCEv2 packet in the SRv6 network. For details, refer to FIG. 7. FIG. 7 is a schematic flowchart of a data transmission method according to an embodiment of this application. The method may include the following steps.

701: A first gateway device obtains a RoCEv2 packet.

First, a source-end network interface card device (which may be referred to as a first network interface card device) generates the RoCEv2 packet based on to-be-sent RDMA data, and the source-end gateway device (which may be referred to as the first gateway device) corresponding to the first network interface card device receives the RoCEv2 packet from the first network interface card device. The RoCEv2 packet is a packet to be sent by the first gateway device to a destination-end gateway device (which may be referred to as a second gateway device). It should be noted that the first gateway device and the second gateway device perform data transmission based on an SRv6 network. The SRv6 network may be a wide area network, or may be a metropolitan area network. Specifically, a specific application type of the SRv6 network is not limited in this application.

It should be noted that, in some implementations of this application, it is assumed that IPv4 private network addresses are deployed on the first network interface card device corresponding to the first gateway device and the second network interface card device corresponding to the second gateway device. In this case, a manner in which the first gateway device obtains the RoCEv2 packet to be sent to the second gateway device may be: The first network interface card device generates an original RoCEv2 packet based on the to-be-sent RDMA data, and then the first gateway device performs IPv4 over IPv6 tunnel encapsulation on the original RoCEv2 packet to obtain the RoCEv2 packet, so that a network interface card device deployed in a user private network can implement a function of mutual communication across a wide area network/metropolitan area network.

It should be further noted that in some implementations of this application, because the first gateway device may receive various packets transmitted by the first network interface card device, a manner in which the first gateway device determines whether a received target packet is the RoCEv2 packet is as follows: determining, based on a UDP destination port number in the received target packet, whether the currently received target packet is the RoCEv2 packet.

It should be further noted that, in some implementations of this application, in consideration of optimal packet forwarding performance, a dedicated gateway device may be selected in this application. To be specific, a component for implementing the SRv6 network-based data transmission method provided in this embodiment of this application may be coupled to an existing gateway device to form a dedicated gateway device. However, the component for implementing the SRv6 network-based data transmission method is not limited to the dedicated gateway device, that is, may be decoupled and independently deployed. For example, the component for implementing the SRv6 network-based data transmission method may be deployed on a server, a conventional network device, or a field-programmable gate array (field-programmable gate array, FPGA) device. The first gateway device described in this application is merely an execution entity for implementing a function of the component. A specific physical form of the first gateway device is not limited in this application.

702: The first gateway device generates a target request based on the RoCEv2 packet, and sends the target request to a network controller of the SRv6 network.

After obtaining the RoCEv2 packet, the first gateway device further generates the corresponding request based on the RoCEv2 packet. The request may be referred to as the target request. Then, the first gateway device sends the target request to the network controller in the SRv6 network.

It should be noted that in some implementations of this application, after recognizing the RoCEv2 packet, the first gateway device may first determine a packet type of the RoCEv2 packet based on a customized determining rule, and then generate the corresponding target request based on the packet type of the RoCEv2 packet. Specifically, the first gateway device may determine, based on a RoCEv2 packet classification method designed in this application, whether the RoCEv2 packet is a control (control flow, CF) packet or a data (data flow, DF) packet, and then determine, based on whether the RoCEv2 packet is a CF packet or a DF packet, the target request to be subsequently sent.

First, the RoCEv2 packet classification method designed in this application is described. In this application, by analyzing an IB protocol specification and various types of RoCEv2 packet formats, RoCEv2 packets may be classified into two types: a CF packet and a DF packet. The following separately describes the two types of packets.

### 1. CF packet

The CF packet does not carry a service data payload. In other words, if the RoCEv2 packet is a packet that does not carry a payload field, the RoCEv2 packet is a CF packet. In addition to a BTH header (base transport header), the CF packet may carry other L4 headers, such as an ETH (extended transport header) and a CMM (communication management message), as required. The CF packet is usually triggered by an interaction mechanism of the IB protocol. Different types of CF packets have different lengths, but are all single short packets with fixed lengths. A transmission bandwidth requirement can be deduced based on a packet size and a quantity of concurrently sent packets. Generally, a transmission bandwidth requirement for a bearer network is not high.

The CF packet includes the following types of packets: a CM link setup packet, a Read Request packet, a Cmp Swap packet, a Fetch Add packet, an ACK packet, an Atomic ACK packet, and a RESYNC packet. A specific type of packet to which a CF packet belongs may be determined based on values of an opcode field and a destination queue pair field in a BTH header of the packet. Details are not described in this application.

### 2. DF packet

The DF packet carries a service data payload. In other words, if the RoCEv2 packet is a packet that carries a payload field, the RoCEv2 packet is a DF packet. The DF packet further carries a BTH and an optional L4 header. The DF packet is usually triggered by a send, read, or write primitive operation. A length of the DF packet is affected by a size of to-be-sent data and a transmission path maximum transmission unit (path maximum transmission unit, PMTU). In general, a relatively high transmission bandwidth requirement is imposed on a bearer network. The transmission bandwidth requirement may be computed according to an existing rule in a standard protocol, or may be computed according to another customized rule. This is not limited in this application.

The DF packet includes the following types of packets: a read response packet, a write/send first packet, a write/send middle packet, a write/send last packet, a write/send only packet, and a write/send only with immediate packet.

It should be noted that, in this embodiment of this application, the write/send first packet, the write/send middle packet, and the write/send last packet all correspond to one piece of RDMA data (that is, one RDMA message), and the write/send only packet or the write/send only with immediate packet each corresponds to one piece of RDMA data. To be specific, one piece of RDMA data (which may also be referred to as an RDMA message or RDMA traffic) may be independently sent as a data packet. In this case, usually, when the RDMA data is not large, the packet corresponding to the RDMA data may be a write/send only packet or a write/send only with immediate packet. When the RDMA data is large and cannot be sent in one data packet, the RDMA data may be split into at least three data packets. A first data packet (also referred to as an initial packet) obtained through splitting corresponds to a write/send first packet, a last data packet obtained through splitting corresponds to a write/send last packet, and a middle data packet (which may be one or more) corresponds to a write/send middle packet.

Similarly, a specific type of packet to which a DF packet belongs may also be determined based on values of an opcode field and a destination queue pair field in a BTH header of the packet. Details are not described in this application.

After the first gateway device obtains a type of the RoCEv2 packet by using the foregoing RoCEv2 packet classification method in this application, the first gateway device may generate the corresponding target request based on the type (that is, a CF packet or a DF packet) of the RoCEv2 packet. Details are separately described below.
1. When the RoCEv2 packet is a CF packet, the target request is a first path computation request.

When the first gateway device determines that the RoCEv2 packet is a CF packet, the first gateway device generates the first path computation request based on the CF packet. The first path computation request is used to trigger the network controller to determine, for the CF packet, a path computation result corresponding to the CF packet. It should be noted that, in some implementations of this application, the first path computation request generated by the first gateway device may be sent to the network controller by using an edge-site management system. It should be further noted that when the RoCEv2 packet is a CF packet, one piece of RDMA data usually corresponds to one packet because the CF packet is usually not large and does not need to be split.

It should be noted that, in this embodiment of this application, although lengths of different types of CF packets may be different, each CF packet is a single short packet with a fixed length, and therefore, a transmission bandwidth requirement of a bearer network is not high. Therefore, for the first gateway device (it is assumed that the first gateway device is denoted as RGW1) serving as a source end and the second gateway device (it is assumed that the second gateway device is denoted as RGW2) serving as a destination end, the network controller may compute a path computation result of RGW1→RGW2 in advance. The path computation result includes a network path of RGW1→RGW2 and a network resource (for example, a bandwidth) reserved for the CF packet. Subsequently, all CF packets sent from RGW1 to RGW2 correspond to this path computation result.

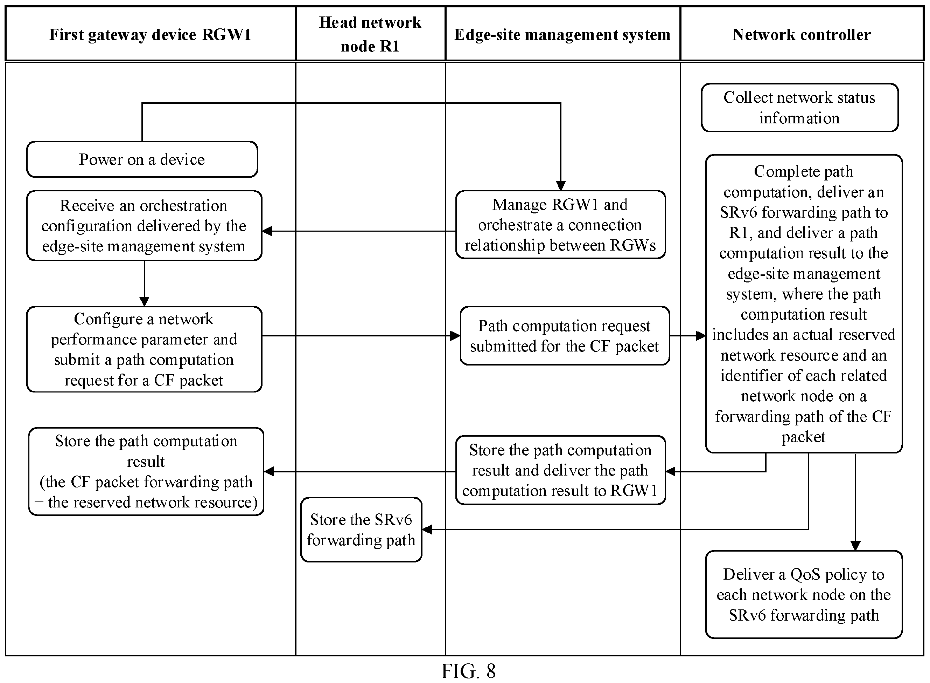

It should be further noted that, in this embodiment of this application, a time in which the network controller computes the path computation result of RGW1→RGW2 for the CF packet may include but is not limited to: that the path computation result may be determined during network initialization processing, or that the path computation result may be determined when the first gateway device has a CF packet to be sent for a first time. This is separately described below.
A. During network initialization processing, the network controller computes the path computation result of RGW1→RGW2 for the CF packet.
   For details, refer to FIG. 8. FIG. 8 is a schematic flowchart of a network initialization processing phase according to an embodiment of this application. In the SRv6 network, first, the network controller may collect network status information (such as a network topology, a Binding SID, and an SR-Policy status) according to the BGP-LS protocol. When RGW1 is powered on, RGW1 is managed by the edge-site management system. An administrator may orchestrate a connection relationship between all managed gateway devices by using the edge-site management system (a topological graph of the managed gateway devices may be a default full-mesh topology or a pre-defined topology, which is not limited in this application). Then, RGW1 receives an orchestration configuration delivered by the edge-site management system. The orchestration configuration is used to implement a capability of passing through a tunnel in an SRv6 network by RGW1 and RGW2. When the edge-site management system determines that the two RGWs (that is, RGW1 and RGW2) are connected, the edge-site management system delivers respective orchestration configurations to the two RGWs. In addition, the administrator configures a network performance parameter for RGW1 to each other connected RGW (Note: 10 Mbps can support 3814 CM link setups or 16890 read request requests, and RGW1 may adjust a network performance parameter of a CF packet according to a signaling interaction status locally collected in real time). For example, the administrator may configure a bandwidth and latency as bandwidth and latency parameters, respectively. In some other implementations of this application, the network performance parameter may alternatively be a default value set in advance according to a specific rule. A specific implementation of configuring the network performance parameter is not limited in this application. In addition, a specific type (for example, a bandwidth or latency) of the network performance parameter is not limited in this application. A user may determine a needed network resource type according to a requirement. Finally, the edge-site management system may submit, to the network controller based on the preconfigured network performance parameter, a path computation request for a CF packet between gateway devices with a connection relationship therebetween (for example, RGW1→RGW2, RGW1→RGW3, and RGW1→RGW4), and the network controller computes, based on each path computation request, the path computation result of transmitting the CF packet between the gateway devices with the connection relationship therebetween and stores the path computation result. For example, it is assumed that a path computation result of RGW1→RGW2 is denoted as S1, a path computation result of RGW1→RGW3 is denoted as S2, ..., and a path computation result of RGW1→RGWn is denoted as Sn. When RGW1 has a CF packet to be sent to RGW2, RGW1 sends a first path computation request (including the destination-end gateway device RGW2) to the network controller by using the edge-site management system, and the network controller may call, based on the first path computation request, the pre-computed path computation result S1 of RGW1→RGW2, and send the path computation result S1 to RGW1 by using the edge-site management system.
B. When there is a CF packet to be sent for a first time, the network controller computes a path computation result of RGW1→RGW2 for the CF packet.

In this case, a network initialization processing process is similar to the foregoing process. A difference is that the network controller does not need to pre-compute a path computation result of transmitting a CF packet between gateway devices with a connection relationship therebetween. However, when a specific gateway device (for example, RGW1) needs to send a CF packet to another gateway device (for example, RGW2) for a first time, RGW1 directly sends the first path computation request to the network controller by using the edge-site management system. The first path computation request may carry a network performance requirement. The network controller then temporarily computes, based on the first path computation request, the path computation result of RGW1→RGW2. Subsequently, if RGW1 still needs to send a CF packet to RGW2, the CF packet is further sent based on the path computation result obtained through computation.

2. When the RoCEv2 packet is a DF packet, the target request is a second path computation request that carries a network performance requirement.

When the first gateway device determines that the RoCEv2 packet is a DF packet, the first gateway device generates the second path computation request based on the DF packet. Different from the first path computation request, the second path computation request needs to carry the network performance requirement. The second path computation request that carries the network performance requirement is used to request the network controller to determine a path computation result for the DF packet based on the network performance requirement. It should be also noted that, in some implementations of this application, the second path computation request generated by the first gateway device may be sent to the network controller by using the edge-site management system.

It should be noted that, in this embodiment of this application, the second path computation request needs to carry the network performance requirement because a length of the DF packet is determined by an upper-layer RDMA application and the length is usually not fixed, and the second path computation request needs to carry the network performance requirement that is applied for (for example, a bandwidth resource that needs to be applied for) to request the network controller to determine the path computation result based on the carried network performance requirement. In addition, because each DF packet may carry a different message size, that is, a different value of a payload field, the network controller needs to compute path computation results respectively for different DF packets. A basis for computation is the network performance requirement carried in the second path computation request.

It should be further noted that, in some implementations of this application, manners of determining network performance requirements for DF packets triggered by different operations are also different. The following separately provides descriptions.
A. The DF packet is a packet triggered by a write primitive operation or a read primitive operation.
   When the DF packet is a packet triggered by the write primitive operation, a size of a message that needs to be transmitted in this operation is indicated by using a DMA length field in a RETH header of an initial packet (that is, a first packet, where one piece of RDMA data may be split into n data packets, and a message size corresponding to the RDMA data is carried in only the first packet, and another subsequent data packet corresponding to the RDMA data is sent based on a network path the same as that of the initial packet). Similarly, when the data packet is a packet triggered by the read primitive, the network performance requirement is carried in a read request packet, and a requester triggers path computation of a reverse forwarding path that uses a responder as a start node. When the responder receives the read request request and replies with a read response, the responder may reply with a plurality of response packets. All packets need to be forwarded along pre-computed paths. Therefore, in this case, the first gateway device may determine the network performance requirement based on the DMA length field in the RETH header of the DF packet, to generate the second path computation request that carries the network performance requirement.
B. The DF packet is a packet triggered by a send primitive operation.

When the DF packet is the packet triggered by the send primitive operation, a corresponding message size of to-be-transmitted RDMA data is also determined. However, there is no corresponding field for identifying the message size in the current packet. Therefore, in this embodiment of this application, through optimization of the RoCEv2 protocol of the network interface card device, the DF packet triggered by the send primitive operation may also carry the field to identify the message size of the RoCv2 data that needs to be sent in this operation. This may be implemented by reusing the RETH header defined in the IB specification. Specifically, the RETH header may be added by the first network interface card device (a network interface card device corresponding to the first gateway device) before the payload field of the DF packet. The DMA length field in the RETH header is used to represent a size of RDMA data corresponding to the DF packet. For example, the first network interface card device may set virtual addr (a field defined in the RETH header) to 0xFFFFFFFF (a specific value of the field may be customized), set remote key (a field defined in the RETH header) to 0xFFFF (a specific value of the field may be customized), and set a DMA length (a field defined in the RETH header) to a message size of RoCv2 data that needs to be sent for the DF packet triggered by the current send primitive operation. Afterward, the first gateway device may determine the network performance requirement based on the DMA length field in the RETH header of the DF packet, to generate the second path computation request that carries the network performance requirement.

It should be noted that in some implementations of this application, regardless of whether the packet is a DF packet triggered by a write primitive operation or a read primitive operation or a DF packet triggered by a send primitive operation, if one piece of RDMA data is split into n data packets, an initial packet carries a network performance requirement such as a bandwidth and latency needed by the entire RDMA data, and a subsequent data packet does not carry the network performance requirement. Data transmission is performed for a path computation result of the subsequent data packet based on a path computation result of the initial packet.

703: The network controller obtains a path computation result based on the target request, and determines a QoS policy based on the path computation result. The path computation result includes a network path between the first gateway device and a second gateway device and a network resource reserved for the RoCEv2 packet.

After the first gateway device generates the target request based on the RoCEv2 packet, and sends the target request to the network controller in the SRv6 network (for example, by using the edge-site management system), the network controller obtains the path computation result based on the received target request and determines the QoS policy based on the path computation result. For example, FIG. 5 shows a process of computing a path computation result and determining a QoS policy for a CF packet. The path computation result includes a network path (which may also be referred to as an SRv6 forwarding path) between the first gateway device and the second gateway device and a network resource reserved by the network controller for the RoCEv2 packet, for example, a network bandwidth resource and minimum network latency. It should be noted that, in this embodiment of this application, the reserved network resource is a network resource of the RoCEv2 packet on an entire network path. For example, it is assumed that the network path is R1→R2→R3. In this case, the reserved network resource is a resource of the entire network path R1→R2→R3.

It should be noted that, because RDMA data transmission carried over the RoCEv2 protocol has a feature of a clear bandwidth requirement, when the RoCEv2 packet is transmitted over the SRv6 network, a network path with shortest latency may be selected for the RoCEv2 packet according to the clear bandwidth requirement (that is, the reserved network resource is a single factor of a bandwidth), or a network path that satisfies a requirement may be selected for the RoCEv2 packet according to a clear "bandwidth + latency" requirement (that is, the reserved network resource is dual target factors of a bandwidth and latency).

704: The first gateway device obtains the path computation result, and extends the RoCEv2 packet based on the path computation result to obtain an extended RoCEv2 packet. The extended RoCEv2 packet carries a first identifier and a second identifier. The first identifier represents each network node on the network path, and the second identifier represents RDMA data corresponding to the RoCEv2 packet, so that the network controller performs bandwidth assurance based on the second identifier and the QoS policy.

After computing the path computation result based on the target request, the network controller may deliver the path computation result to the first gateway device through the edge-site management system. After obtaining the path computation result, the first gateway device extends the to-be-sent RoCEv2 packet based on the path computation result to obtain an extended RoCEv2 packet. The extended RoCEv2 packet carries at least the first identifier and the second identifier. The first identifier represents each network node on the network path, and the second identifier represents RDMA data corresponding to the RoCEv2 packet, so that the network controller performs bandwidth assurance based on the second identifier and the pre-computed QoS policy.

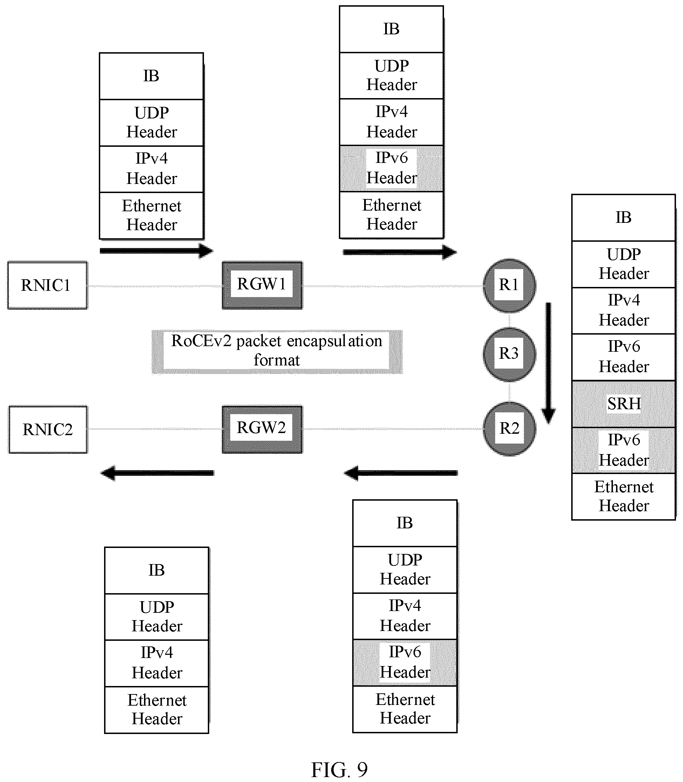

Before how to extend the to-be-sent RoCEv2 packet is described, a case in which a packet header changes when the source-end network interface card (that is, the first network interface card device) communicates with the destination-end network interface card (that is, the second network interface card device) and the RoCEv2 packet passes through each network node on the network path is first described. For details, refer to FIG. 9. An example in which the IPv4 private network addresses are deployed on the first network interface card device and the second network interface card device is used. It is assumed that the network path is R1→R3→R2, the first network interface card device is RNIC1, the second network interface card device is RNIC2, the first gateway device is RGW1, and the second gateway device is RGW2. In a RoCEv2 packet transmission process, a change of the packet header is shown in FIG. 9. After receiving the RoCEv2 packet (that is, the original RoCEv2 packet described above) transmitted by RNIC1, RGW1 first completes IPv4 over IPv6 encapsulation processing, and then transmits the encapsulated RoCEv2 packet to a head network node R1 on the network path. In each network node, the RoCEv2 packet is transmitted by using an SRH field (this field is used for routing between network nodes).

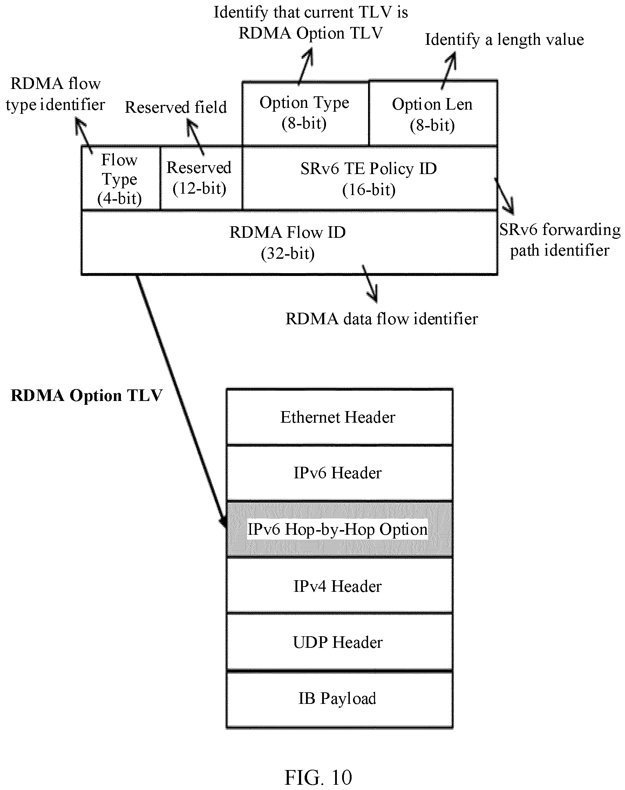

For the outer encapsulated IPv6 header herein, in a subsequent procedure, an extended option RDMA Option TLV (a format may be shown in FIG. 10) defined in this application is encapsulated in an IPv6 Hop-by-Hop Option based on a path computation result returned by the network controller in the SRv6 network, so that the RoCEv2 packet can carry an RDMA data flow identifier RDMA Flow ID (that is, the second identifier, to be used by the network controller to perform bandwidth assurance based on the QoS policy) and a forwarding path identifier SRv6 TE Policy ID (that is, the first identifier). In other words, the first gateway device modifies the IPv6 Hop-by-Hop Option in the outer IPv6 header of the RoCEv2 packet based on the path computation result, to obtain the extended RoCEv2 packet.

It should be noted that, in some implementations of this application, the extended option RDMA Option TLV defined in this application may also carry an RDMA flow type identifier Flow Type that is used to indicate whether the current packet is a CF packet or a DF packet, and may further carry a reserved field reserved that is used for adding another identifier subsequently, thereby improving flexibility.

For ease of further understanding of the foregoing process, the following uses a specific example to describe a specific implementation of a transmission optimization method of the first gateway device for a CF packet and a DF packet.

### 1. Transmission optimization processing of the first gateway device for the CF packet

For the CF packet after classification, the first gateway device modifies an extended option of the outer IPv6 header, so that the CF packet carries the first identifier and the second identifier. In this way, after the CF packet enters the SRv6 network, a network node may divert the CF packet to an SRv6 forwarding path (that is, a network path) pre-allocated based on TE traffic engineering and perform strict bandwidth assurance.

Specifically, RGW1 may encapsulate the RDMA Option TLV (for details, refer to a format definition shown in FIG. 10) in the IPv6 header based on the path computation result that is of the CF packet and that is applied for in advance in the embodiment corresponding to FIG. 8, so that the IPv6 header can carry the first identifier (that is, an SRv6 forwarding path identifier of the CF packet, which may be represented by policy-id1) and the second identifier of the CF packet (that is, a flow identifier of the CF packet, which may be represented by cf-flow-id). The extended CF packet is forwarded to the head network node R1. After receiving the extended CF packet, the head network node R1 parses the RDMA Option TLV option, performs traffic diversion processing based on the SRv6 forwarding path identifier SRv6 TE Policy ID (refer to FIG. 10) in the CF packet, and obtains a pre-delivered QoS policy matching the RDMA data flow identifier RDMA Flow ID in the CF packet to perform bandwidth assurance.

It should be noted that, in some implementations of this application, a manner of processing the read request packet and the read response packet is special because the read request packet belongs to a CF packet, a peer gateway device needs to respond with the read response packet after receiving the read request packet (that is, sending of the read response packet is triggered by the read request packet), and the read response packet belongs to a DF packet. A specific processing process may be shown as follows: First, the first network interface card device RNIC1 sends a read request request (that is, a CF packet, which may be referred to as a request packet) to the second network interface card device RNIC2. After receiving the request packet, the first gateway device RGW1 first caches the packet, considers a DMA Length carried in a RETH header in the request packet as a bandwidth request, considers a configured latency parameter as a latency request, and submits, by using the edge-site management system, a path computation request of R2-R1 to the network controller for a to-be-sent read response packet (that is, a response packet of the request packet, which may be referred to as a response packet for short). After completing computation based on the path computation request, the network controller delivers an SRv6 forwarding path to the head network node R2, and delivers a forwarding path identifier (which may be represented by policy-id2) and an actual reserved bandwidth (which may be represented by allocated-bw) to the edge-site management system. A QoS policy including (df-flow-id1 and allocated-bw) is delivered to each network node on the SRv6 forwarding path. The edge-site management system receives the forwarding path identifier policy-id2 and the actual reserved bandwidth allocated-bw (that is, the path computation result), and synchronizes the path computation result of R2→R1 to RGW2. The path computation result carries the allocated policy-id2 and the reserved allocated bandwidth allocated-bw in this time of path computation. It should be noted herein that if an actually allocated bandwidth is less than a bandwidth that is applied for, RGW2 may locally record is_bw_satisfied as false, and a purpose of the recording is using the recorded content as a basis for determining whether to perform source-end rate limiting subsequently. Then, the edge-site management system notifies RGW1 that path computation is completed. After receiving the notification, RGW1 sends the cached request packet according to a general processing procedure of the CF packet. After receiving the request packet, RNIC2 responds with the response packet. After receiving the response packet, RGW2 first completes IPv4 over IPv6 processing. Then, RDMA Option TLV is encapsulated in the IPv6 header based on DF packet forwarding path information whose application is triggered by the request packet, so that the IPv6 header can carry the DF packet flow identifier df-flow-id1 and the DF packet forwarding path identifier policy-id2. The response packet is forwarded to the head network node R2. If an actual reserved bandwidth of the network controller is less than a bandwidth that is applied for, RGW2 further needs to perform source-end rate limiting based on the actually allocated reserved bandwidth. After receiving the response packet, the head network node R2 parses the RDMA Option TLV option, performs traffic diversion processing based on the SRv6 TE Policy ID in the response packet, and obtains a pre-delivered QoS policy matching the RDMA Flow ID in the response packet to perform bandwidth assurance.

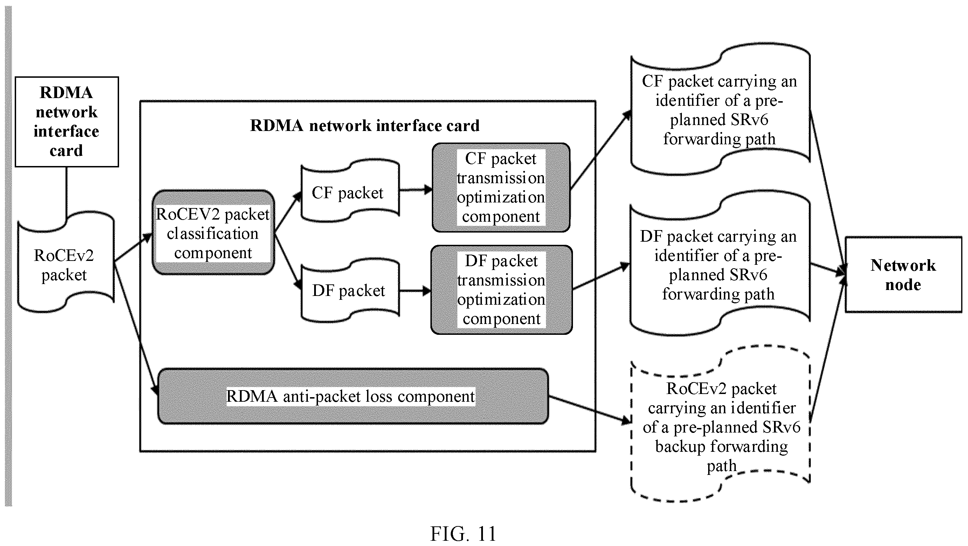

It should be further noted that a function of transmission optimization processing of the first gateway device for the CF packet may be implemented by using a CF packet transmission optimization component. For details, refer to FIG. 11. It should be noted that after the first gateway device recognizes the RoCEv2 packet, a function of distinguishing between a CF packet and a DF packet according to the classification method provided in this application may be implemented by using a RoCEv2 packet classification component shown in FIG. 11.

### 2. Transmission optimization processing of the first gateway device for the DF packet

For the DF packet after classification, the first gateway device triggers, based on a size of a message of to-be-transmitted RDMA data, the network controller to complete path computation based on TE traffic engineering, and then modifies an extended option of an outer IPv6 header, so that the DF packet carries the first identifier and the second identifier. In this way, after the DF packet enters the SRv6 network, a network node may divert the DF packet to a pre-allocated SRv6 forwarding path (that is, a network path) and perform strict bandwidth assurance.

Specifically, for the DF packet after classification, the first gateway device needs to cache all DF packets, and submit a second path computation request to the network controller by using the edge-site management system. The request carries a network performance requirement such as a bandwidth and latency. After the network controller obtains a path computation result through computation based on the submitted second path computation request, the edge-site management system forwards the path computation result to the first gateway device. The first gateway device completes filling of the extended option of the IPv6 header based on the path computation result and sends the DF packet. If an actually pre-allocated bandwidth of the network controller does not satisfy a bandwidth that is applied for, when sending the DF packet, the first gateway device further needs to perform source-end rate limiting based on the actual bandwidth. The network node diverts the DF packet to the pre-computed SRv6 forwarding path based on the extended option of the IPv6 header in the packet and completes local QoS assurance processing.

Particularly, a transmission optimization processing process of a DF packet triggered by a write/send primitive operation (which may be referred to as a write/send packet for short) is as follows: First, the first network interface card device RNIC1 sends a write/send packet to the second network interface card device RNIC2. After receiving the write/send packet, the first gateway device RGW1 first caches the write/send packet. If the write/send packet is a write/send first packet, subsequent write/send middle and write/send last packets also need to be cached. If the write/send packet is a write/send only packet, the current packet is cached. RGW1 considers the DMA Length in the packet as a bandwidth request, considers a configured latency parameter as a latency request, and submits a path computation request of R1→R2 to the network controller by using the edge-site management system for the to-be-sent write/send packet. The network controller completes computation of a path computation result based on the received path computation request, delivers an SRv6 forwarding path to the head network node R1, and delivers a forwarding path identifier policy-id3 and an actual reserved bandwidth allocated-bw to the edge-site management system. A QoS policy including (df-flow-id2 and allocated-bw) is delivered to each network node on the SRv6 forwarding path. After receiving the path computation result, the edge-site management system synchronizes the path computation result of R1→R2 to RGW1. The path computation result carries the allocated policy-id3 and the reserved allocated bandwidth allocated-bw in this time of path computation. If an actually allocated bandwidth is less than a bandwidth that is applied for, RGW1 needs to locally record is_bw_satisfied as false. A purpose of the recording is using the recorded content as a basis for determining whether to perform source-end rate limiting subsequently. Then, RGW1 sequentially processes the cached write/send packet (write/send first-write/send middle-write/send last, or single write/send only), first completes IPv4 over IPv6 processing, and then encapsulates RDMA Option TLV in the IPv6 header based on DF packet forwarding path information whose application is triggered by the write/send request, so that the IPv6 header can carry the DF packet flow identifier df-flow-id2 and the DF packet forwarding path identifier policy-id3. The packet is forwarded to the head network node R1. If an actual reserved bandwidth of the network controller is less than a bandwidth that is applied for, RGW1 needs to perform source-end rate limiting based on the actually allocated reserved bandwidth. After receiving the packet, the head network node R1 parses the RDMA Option TLV option, performs traffic diversion processing based on the SRv6 TE Policy ID in the packet, and obtains a pre-delivered QoS policy matching the RDMA Flow ID in the packet to perform bandwidth assurance.

It should be further noted that a function of transmission optimization processing of the first gateway device for the DF packet may be implemented by using a DF packet transmission optimization component. For details, refer to FIG. 11.

705: The first gateway device sends the extended RoCEv2 packet to the second gateway device over the network path.

After obtaining the extended RoCEv2 packet, the first gateway device may send the extended RoCEv2 packet to the peer second gateway device over the network path (that is, the foregoing SRv6 forwarding path) obtained through computation.

It should be noted that, in some implementations of this application, for all RoCEv2 packets, in addition to performing deterministic transmission based on the foregoing CF/DF packet transmission optimization mechanism, the first gateway device may further actively duplicate a packet, and modify an extended option of an outer IPv6 header of the duplicated packet, so that the duplicated packet carries an SRv6 forwarding path identifier and a CF packet flow identifier. Therefore, after the duplicated packet enters the SRv6 network, the network controller may divert the duplicated packet to a backup SRv6 forwarding path, so that the peer second gateway device performs dual fed and selective receiving processing, to avoid a packet loss problem in a traffic redundancy manner.

Specifically, the process may be as follows: First, the first gateway device obtains a backup path. The backup path may be referred to as a first backup path. The first backup path may be triggered to be generated when the network controller receives the target request. Then, the first gateway device duplicates the RoCEv2 packet to obtain a first duplicated packet. The first gateway device extends the first duplicated packet based on the first backup path in a manner similar to the foregoing process to obtain an extended first duplicated packet. The extended first duplicated packet still needs to carry an SRv6 forwarding path identifier. The SRv6 forwarding path identifier carried in the extended first duplicated packet may be referred to as a third identifier. The third identifier represents each network node on the first backup path. Finally, the first gateway device sends the extended first duplicated packet to the second gateway device over the first backup path, so that the second gateway device performs dual fed and selective receiving processing on the extended RoCEv2 packet and the extended first duplicated packet. To be specific, in addition to performing transmission optimization processing on the RoCEv2 packet based on the foregoing steps, the source-end RDMA gateway needs to additionally duplicate all the RoCEv2 packets, complete IPv4 over IPv6 processing, and then encapsulate RDMA Option TLV in the IPv6 header, so that the IPv6 header can carry a pre-allocated backup forwarding policy of the network controller (in this embodiment, a maximum availability path max availability path may be selected, and bandwidth assurance is not required when the SRv6 network forwards backup traffic). The duplicated RoCEv2 packet is forwarded to the head network node R1. The peer RDMA gateway receives two RoCEv2 packets from the computed specified path and the backup path, and performs dual fed and selective receiving processing. A manner of the dual fed and selective receiving processing may be: reserving a first received packet, and directly discarding a later received packet. For example, if the extended RoCEv2 packet arrives at the second gateway device first, the extended RoCEv2 packet is kept, and the extended first duplicated packet that arrives at the second gateway device later is discarded. A reverse case is similar. Details are not described herein. In this application, a packet received later is discarded by using a dual fed and selective receiving capability, to implement a RoCEv2 anti-packet loss capability.

It should be further noted that the first gateway device may implement the foregoing anti-packet loss function by using a RoCEv2 anti-packet loss component. For details, refer to FIG. 11.

It should be further noted that, in some other implementations of this application, an alternative solution of RoCEv2 anti-packet loss processing is further provided. A main difference is that, in this embodiment of this application, packet duplication is not performed at an RDMA gateway, but duplication processing of the RoCEv2 packet is completed by the head network node of the SRv6 network. Specifically, the process may be as follows: When the extended RoCEv2 packet is sent to the head network node of the network path (the head network node may also be referred to as a source network node, that is, a network node that is on the network path and that is directly connected to the first gateway device, and a first network node on the network path along a data transmission direction), the head network node is triggered to duplicate the extended RoCEv2 packet to obtain a second duplicated packet. The second duplicated packet is sent over a pre-prepared backup path (which may be referred to as a second backup path). Finally, a tail network node of the network path (the tail network node may also be referred to as a destination network node, that is, a network node that is on the network path and that is directly connected to the second gateway device, and a last network node on the network path along the data transmission direction) performs dual fed and selective receiving processing on the extended RoCEv2 packet and the second duplicated packet. The second backup path may also be triggered to be generated when the network controller receives the target request. To be specific, after receiving the RoCEv2 packet, the head network node of the SRv6 network may first recognize, based on a Flow Type field in RDMA Option TLV in an IPv6 header, whether the current packet is RoCEv2 traffic. If the current packet is RoCEv2 traffic, the head network node of the SRv6 network duplicates the packet and forwards the packet on a highest available path (that is, a second backup path). After receiving two RoCEv2 packets, the tail network node may discard, by using a dual fed and selective receiving capability, a packet received later. In this way, the RoCEv2 anti-packet loss capability is implemented during transmission in a wide area network/metropolitan area network.

The gateway device in this embodiment of this application does not need to implement anti-packet loss processing of dual fed and selective receiving. Implementation of this capability is provided by a network node in the SRv6 network, so that forwarding pressure of the gateway device can be reduced. This is different from a process in which the first gateway device performs packet duplication to implement anti-packet loss processing.

It should be further noted that in some implementations of this application, when the reserved network resource does not satisfy a network performance requirement of the extended RoCEv2 packet, the first gateway device may further perform source-end rate limiting by using a flow control mechanism. In other words, when a network transmission bandwidth cannot satisfy a requirement, an optimal SRv6 forwarding path in a current case may be further selected, and the first gateway device is notified of a size of a bandwidth allocated for this transmission, so that the first gateway device performs reduced-rate sending at a source end by using the flow control mechanism, to reduce congestion and avoid a packet loss.

It should be noted that basic logic of the foregoing embodiment of this application is based on a feature that a size of to-be-transmitted RDMA data at an application layer can be accurately perceived according to the RoCEv2 protocol, and an accurate network performance requirement is put forward for a lower-layer bearer network before traffic transmission, so that path planning and network resource reservation are performed in advance, to ensure determinacy of traffic in a transmission process of the bearer network. On this basis, collaboration between a RoCEv2 packet and an SRv6 network is designed in this application. However, in some other implementations of this application, this idea may also be applied to a flexible Ethernet (flex ethernet, FlexE) hard slicing network or a time sensitive network (time sensitive network, TSN). A purpose of optimizing transmission of RDMA data in a wide area network/metropolitan area network is implemented through collaboration between a RoCEv2 packet and the FlexE/TSN protocol. A specific process is similar to the foregoing process. Details are not described herein again.

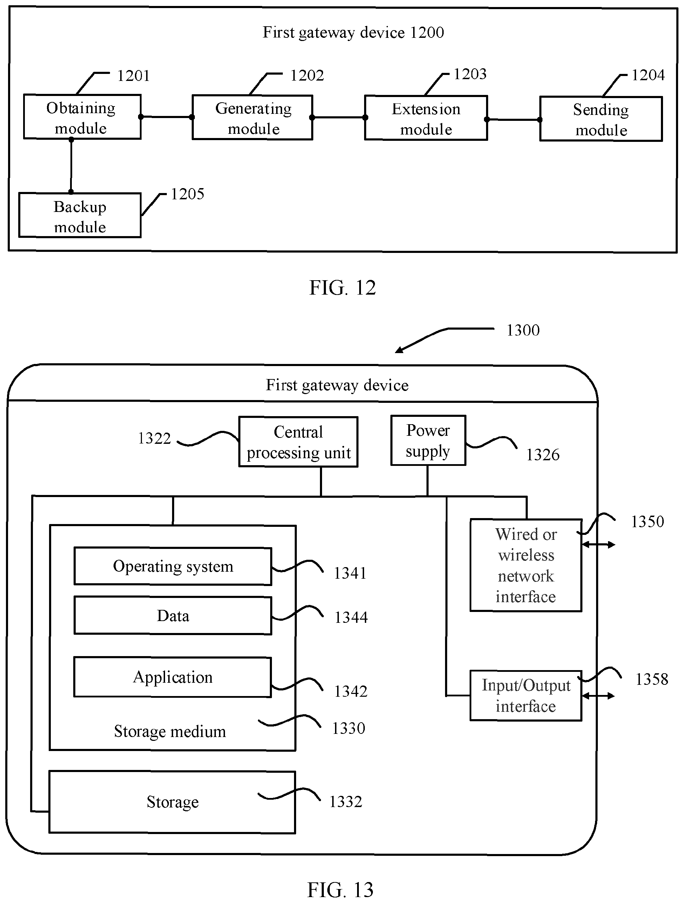

Based on the foregoing embodiments, the following further provides a related device used to implement the solutions, to better implement the solutions in embodiments of this application. For details, refer to FIG. 12. FIG. 12 is a diagram of a structure of a first gateway device according to an embodiment of this application. The first gateway device 1200 may specifically include an obtaining module 1201, a generating module 1202, an extension module 1203, and a sending module 1204. The obtaining module 1201 is configured to obtain a RoCEv2 packet. The generating module 1202 is configured to: generate a target request based on the RoCEv2 packet, and send the target request to a network controller of an SRv6 network, so that the network controller obtains a path computation result based on the target request, and the network controller determines a QoS policy based on the path computation result. The path computation result includes a network path between the first gateway device and a second gateway device and a network resource reserved for the RoCEv2 packet. The first gateway device and the second gateway device perform data transmission based on the SRv6 network. The extension module 1203 is configured to: obtain the path computation result, and extend the RoCEv2 packet based on the path computation result to obtain an extended RoCEv2 packet. The extended RoCEv2 packet carries a first identifier and a second identifier. The first identifier represents each network node on the network path, and the second identifier represents RDMA data corresponding to the RoCEv2 packet, so that the network controller performs bandwidth assurance based on the second identifier and the QoS policy. The sending module 1204 is configured to send the extended RoCEv2 packet to the second gateway device over the network path.

In a possible design, the generating module 1202 is specifically configured to: when it is determined that the RoCEv2 packet is a control packet that does not carry a payload field, generate a first path computation request based on the control packet, where the first path computation request is used to trigger the network controller to determine a path computation result for the control packet.

In a possible design, the generating module 1202 is specifically configured to: when it is determined that the RoCEv2 packet is a data packet that carries a payload field, generate, based on the data packet, a second path computation request that carries a network performance requirement, where the second path computation request is used to request the network controller to determine a path computation result for the data packet based on the network performance requirement.

In a possible design, the generating module 1202 is further specifically configured to: when the data packet is a packet triggered by a send primitive operation, determine the network performance requirement based on a DMA length field in a RETH header of the data packet, where the RETH header is added by a first network interface card device before the payload field of the data packet, the DMA length field in the RETH header represents a size of RDMA data corresponding to the data packet, and the first network interface card device corresponds to the first gateway device; and generate the second path computation request that carries the network performance requirement.

In a possible design, the generating module 1202 is further specifically configured to: when the data packet is a packet triggered by a write primitive operation or a read primitive operation, determine the network performance requirement based on a DMA length field in a RETH header of the data packet; and generate the second path computation request that carries the network performance requirement.

In a possible design, the extension module 1203 is specifically configured to modify an IPv6 Hop-by-Hop Option of an IPv6 header of the RoCEv2 packet based on the path computation result, to obtain the extended RoCEv2 packet.

In a possible design, the first gateway device 1200 further includes: a backup module 1205, configured to: obtain a first backup path, where the first backup path is triggered to be generated when the network controller receives the target request; duplicate the RoCEv2 packet to obtain a first duplicated packet; extend the first duplicated packet based on the first backup path to obtain an extended first duplicated packet, where the extended first duplicated packet carries a third identifier, and the third identifier represents each network node on the first backup path; and send the extended first duplicated packet to the second gateway device over the first backup path, so that the second gateway device performs dual fed and selective receiving processing on the extended RoCEv2 packet and the extended first duplicated packet.

In a possible design, the first gateway device 1200 further includes: a backup module 1205, configured to: when the extended RoCEv2 packet is sent to a head network node on the network path, trigger the head network node to duplicate the extended RoCEv2 packet to obtain a second duplicated packet, where the second duplicated packet is sent over a second backup path, so that a tail network node on the network path performs dual fed and selective receiving processing on the extended RoCEv2 packet and the second duplicated packet, and the second backup path is triggered to be generated when the network controller receives the target request.

In a possible design, the sending module 1204 is specifically configured to: when the reserved network resource does not satisfy a network performance requirement of the extended RoCEv2 packet, perform source-end rate limiting by using a flow control mechanism, and send the extended RoCEv2 packet to the second gateway device over the network path.

In a possible design, IPv4 private network addresses are deployed on the first network interface card device corresponding to the first gateway device and the second network interface card device corresponding to the second gateway device, and the obtaining module 1201 is specifically configured to: obtain an original RoCEv2 packet to be sent to the second gateway device; and perform IPv4 over IPv6 tunnel encapsulation on the original RoCEv2 packet to obtain the RoCEv2 packet.

In a possible design, the obtaining module 1201 is specifically configured to: receive a target packet sent by the first network interface card device, where the first network interface card device corresponds to the first gateway device; and determine, based on a UDP destination port number in the target packet, that the target packet is the RoCEv2 packet.

In a possible design, the reserved network resource includes at least any one of the following: a network bandwidth and minimum network latency.

It should be noted that content such as information exchange and an execution process between the modules/units in the first gateway device 1200 is based on a same concept as the method embodiment corresponding to FIG. 7 in this application. For specific content, refer to the descriptions in the foregoing method embodiments in this application. Details are not described herein again.

An embodiment of this application further provides a first gateway device. Refer to FIG. 13. FIG. 13 is another diagram of a structure of a first gateway device according to an embodiment of this application. The modules of the first gateway device 1200 described in the embodiment corresponding to FIG. 12 may be deployed on the first gateway device 1300, to implement functions of the first gateway device 1200 in the embodiment corresponding to FIG. 12. Specifically, the first gateway device 1300 is implemented by one or more servers, and the first gateway device 1300 may differ greatly due to different configurations or performance. The first gateway device 1300 may include one or more central processing units (central processing units, CPUs) 1322 and a storage 1332, and one or more storage media 1330 (for example, one or more mass storage devices) that store an application program 1342 or data 1344. The storage 1332 and the storage medium 1330 may be a transient storage or a persistent storage. A program stored in the storage medium 1330 may include one or more modules (not shown in the figure), and each module may include a series of instruction operations for the first gateway device 1300. Further, the central processing unit 1322 may be configured to: communicate with the storage medium 1330, and perform, on the first gateway device 1300, the series of instruction operations in the storage medium 1330.

The first gateway device 1300 may further include one or more power supplies 1326, one or more wired or wireless network interfaces 1350, one or more input/output interfaces 1358, and/or one or more operating systems 1341, for example, Windows ServerTM, Mac OS XTM, UnixTM, LinuxTM, or FreeBSDTM.

In this embodiment of this application, the central processing unit 1322 is configured to perform the SRv6 network-based data transmission method that is performed by the first gateway device in the embodiment corresponding to FIG. 7. For example, the central processing unit 1322 is configured to first generate a RoCEv2 packet based on to-be-sent RDMA data. Then, a source-end gateway device (which may be referred to as a first gateway device) corresponding to a first network interface card device receives the RoCEv2 packet from the first network interface card device. The RoCEv2 packet is a packet to be sent by the first gateway device to a destination-end gateway device (which may be referred to as a second gateway device). It should be noted that the first gateway device and the second gateway device perform data transmission based on an SRv6 network. After the RoCEv2 packet is obtained, a corresponding request is further generated based on the RoCEv2 packet. The request may be referred to as a target request. Then, the target request is sent to a network controller in the SRv6 network, so that the network controller obtains a path computation result based on the target request and determines a QoS policy based on the path computation result. The path computation result includes a network path between the first gateway device and a second gateway device and a network resource reserved for the RoCEv2 packet. After computing the path computation result based on the target request, the network controller may deliver the path computation result to the central processing unit 1322 by using an edge-site management system. After obtaining the path computation result, the central processing unit 1322 extends the to-be-sent RoCEv2 packet based on the path computation result to obtain an extended RoCEv2 packet. The extended RoCEv2 packet carries at least a first identifier and a second identifier. The first identifier represents each network node on the network path, and the second identifier represents RDMA data corresponding to the RoCEv2 packet, so that the network controller performs bandwidth assurance based on the second identifier and the pre-computed QoS policy. In this way, the extended RoCEv2 packet can be sent to the peer second gateway device over the network path obtained through computation.

It should be noted that a specific manner in which the central processing unit 1322 performs the foregoing steps is based on a same concept as the method embodiment corresponding to FIG. 7 in this application. Technical effects brought by the manner are the same as those in embodiments in this application. For specific content, refer to the descriptions in the foregoing method embodiments in this application. Details are not described herein again.

Embodiments of this application further provide a computer-readable storage medium. The computer-readable storage medium stores a program for signal processing. When the program is run on a computer, the computer is enabled to perform the steps described in the embodiment shown in FIG. 7.

The first gateway device provided in embodiments of this application may specifically include a chip. The chip includes a processing unit and a communication unit. The processing unit may be, for example, a processor, and the communication unit may be, for example, an input/output interface, a pin, or a circuit. The processing unit may execute computer executable instructions stored in a storage unit, so that a chip in a robot performs the steps described in the embodiment shown in FIG. 7.

Optionally, the storage unit is a storage unit in the chip, for example, a register or a cache; or the storage unit may be a storage unit that is in a radio access device end and that is located outside the chip, for example, a read-only memory (read-only memory, ROM), another type of static storage device that can store static information and instructions, or a random access memory (random access memory, RAM).

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of software product. The computer software product is stored in a readable storage medium, for example, a floppy disk, a USB flash drive, a removable hard disk drive, a ROM, a RAM, a magnetic disk, or an optical disc of a computer, and includes several instructions for indicating a computer device (which may be a personal computer, a network device, or the like) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from one computer-readable storage medium to another computer-readable storage medium. For example, the computer instructions may be transmitted from a website, a computer, or a data center to another website, computer, or data center in a wired (for example, a coaxial cable, an optical fiber, or a digital subscriber line (DSL)) or wireless (for example, infrared, radio, or microwave) manner. The computer-readable storage medium may be any usable medium that may be stored by a computer, or a data storage device, for example, a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

## Claims

1. A data transmission method, comprising:
obtaining, by a first gateway device, a RoCEv2 packet;
generating, by the first gateway device, a target request based on the RoCEv2 packet, and sending the target request to a network controller of an SRv6 network, so that the network controller obtains a path computation result based on the target request, and the network controller determines a QoS policy based on the path computation result, wherein the path computation result comprises a network path between the first gateway device and a second gateway device and a network resource reserved for the RoCEv2 packet, and the first gateway device and the second gateway device perform data transmission based on the SRv6 network;
obtaining, by the first gateway device, the path computation result, and extending the RoCEv2 packet based on the path computation result to obtain an extended RoCEv2 packet, wherein the extended RoCEv2 packet carries a first identifier and a second identifier, the first identifier represents each network node on the network path, and the second identifier represents RDMA data corresponding to the RoCEv2 packet, so that the network controller performs bandwidth assurance based on the second identifier and the QoS policy; and
sending, by the first gateway device, the extended RoCEv2 packet to the second gateway device over the network path.

2. The method according to claim 1, wherein the generating, by the first gateway device, a target request based on the RoCEv2 packet comprises:
when the first gateway device determines that the RoCEv2 packet is a control packet that does not carry a payload field, generating, by the first gateway device, a first path computation request based on the control packet, wherein the first path computation request is used to trigger the network controller to determine a path computation result for the control packet.

3. The method according to claim 1, wherein the generating, by the first gateway device, a target request based on the RoCEv2 packet comprises:
when the first gateway device determines that the RoCEv2 packet is a data packet that carries a payload field, generating, by the first gateway device based on the data packet, a second path computation request that carries a network performance requirement, wherein the second path computation request is used to request the network controller to determine a path computation result for the data packet based on the network performance requirement.

4. The method according to claim 3, wherein the generating, by the first gateway device based on the data packet, a second path computation request that carries a network performance requirement comprises:
when the data packet is a packet triggered by a send primitive operation, determining, by the first gateway device, the network performance requirement based on a DMA length field in a RETH header of the data packet, wherein the RETH header is added by a first network interface card device before the payload field of the data packet, the DMA length field in the RETH header represents a size of RDMA data corresponding to the data packet, and the first network interface card device corresponds to the first gateway device; and
generating, by the first gateway device, the second path computation request that carries the network performance requirement.

5. The method according to claim 3, wherein the generating, by the first gateway device based on the data packet, a second path computation request that carries a network performance requirement comprises:
when the data packet is a packet triggered by a write primitive operation or a read primitive operation, determining, by the first gateway device, the network performance requirement based on a DMA length field in a RETH header of the data packet; and
generating, by the first gateway device, the second path computation request that carries the network performance requirement.

6. The method according to any one of claims 1 to 5, wherein the extending the RoCEv2 packet based on the path computation result to obtain an extended RoCEv2 packet comprises:
modifying, by the first gateway device, an IPv6 Hop-by-Hop Option of an IPv6 header of the RoCEv2 packet based on the path computation result, to obtain the extended RoCEv2 packet.

7. The method according to any one of claims 1 to 6, wherein the method further comprises:
obtaining, by the first gateway device, a first backup path, wherein the first backup path is triggered to be generated when the network controller receives the target request;
duplicating, by the first gateway device, the RoCEv2 packet to obtain a first duplicated packet;
extending, by the first gateway device, the first duplicated packet based on the first backup path to obtain an extended first duplicated packet, wherein the extended first duplicated packet carries a third identifier, and the third identifier represents each network node on the first backup path; and
sending, by the first gateway device, the extended first duplicated packet to the second gateway device over the first backup path, so that the second gateway device performs dual fed and selective receiving processing on the extended RoCEv2 packet and the extended first duplicated packet.

8. The method according to any one of claims 1 to 6, wherein the method further comprises:
when the extended RoCEv2 packet is sent to a head network node on the network path, triggering the head network node to duplicate the extended RoCEv2 packet to obtain a second duplicated packet, wherein the second duplicated packet is sent over a second backup path, so that a tail network node on the network path performs dual fed and selective receiving processing on the extended RoCEv2 packet and the second duplicated packet, and the second backup path is triggered to be generated when the network controller receives the target request.

9. The method according to any one of claims 1 to 8, wherein the sending, by the first gateway device, the extended RoCEv2 packet to the second gateway device over the network path comprises:
when the reserved network resource does not satisfy a network performance requirement of the extended RoCEv2 packet, performing, by the first gateway device, source-end rate limiting by using a flow control mechanism, and sending the extended RoCEv2 packet to the second gateway device over the network path.

10. The method according to any one of claims 1 to 9, wherein IPv4 private network addresses are deployed on the first network interface card device corresponding to the first gateway device and a second network interface card device corresponding to the second gateway device, and that the first gateway device obtains the RoCEv2 packet to be sent to the second gateway device comprises:
obtaining, by the first gateway device, an original RoCEv2 packet to be sent to the second gateway device; and
performing, by the first gateway device, IPv4 over IPv6 tunnel encapsulation on the original RoCEv2 packet to obtain the RoCEv2 packet.

11. The method according to any one of claims 1 to 9, wherein the obtaining, by a first gateway device, a RoCEv2 packet comprises:
receiving, by the first gateway device, a target packet sent by the first network interface card device, wherein the first network interface card device corresponds to the first gateway device; and
determining, by the first gateway device based on a UDP destination port number in the target packet, that the target packet is the RoCEv2 packet.

12. The method according to any one of claims 1 to 11, wherein the reserved network resource comprises at least any one of the following:
a network bandwidth and minimum network latency.

13. A first gateway device, comprising:
an obtaining module, configured to obtain a RoCEv2 packet;
a generating module, configured to: generate a target request based on the RoCEv2 packet, and send the target request to a network controller of an SRv6 network, so that the network controller obtains a path computation result based on the target request, and the network controller determines a QoS policy based on the path computation result, wherein the path computation result comprises a network path between the first gateway device and a second gateway device and a network resource reserved for the RoCEv2 packet, and the first gateway device and the second gateway device perform data transmission based on the SRv6 network;
an extension module, configured to: obtain the path computation result, and extend the RoCEv2 packet based on the path computation result to obtain an extended RoCEv2 packet, wherein the extended RoCEv2 packet carries a first identifier and a second identifier, the first identifier represents each network node on the network path, and the second identifier represents RDMA data corresponding to the RoCEv2 packet, so that the network controller performs bandwidth assurance based on the second identifier and the QoS policy; and
a sending module, configured to send the extended RoCEv2 packet to the second gateway device over the network path.

14. The device according to claim 13, wherein the generating module is specifically configured to:
when it is determined that the RoCEv2 packet is a control packet that does not carry a payload field, generate a first path computation request based on the control packet, wherein the first path computation request is used to trigger the network controller to determine a path computation result for the control packet.

15. The device according to claim 13, wherein the generating module is specifically configured to:
when it is determined that the RoCEv2 packet is a data packet that carries a payload field, generate, based on the data packet, a second path computation request that carries a network performance requirement, wherein the second path computation request is used to request the network controller to determine a path computation result for the data packet based on the network performance requirement.

16. The device according to claim 15, wherein the generating module is further specifically configured to:
when the data packet is a packet triggered by a send primitive operation, determine the network performance requirement based on a DMA length field in a RETH header of the data packet, wherein the RETH header is added by a first network interface card device before the payload field of the data packet, the DMA length field in the RETH header represents a size of RDMA data corresponding to the data packet, and the first network interface card device corresponds to the first gateway device; and
generate the second path computation request that carries the network performance requirement.

17. The device according to claim 15, wherein the generating module is further specifically configured to:
when the data packet is a packet triggered by a write primitive operation or a read primitive operation, determine the network performance requirement based on a DMA length field in a RETH header of the data packet; and
generate the second path computation request that carries the network performance requirement.

18. The device according to any one of claims 13 to 17, wherein the extension module is specifically configured to:
modify an IPv6 Hop-by-Hop Option of an IPv6 header of the RoCEv2 packet based on the path computation result, to obtain the extended RoCEv2 packet.

19. The device according to any one of claims 13 to 18, wherein the device further comprises a backup module, configured to:
obtain a first backup path, wherein the first backup path is triggered to be generated when the network controller receives the target request;
duplicate the RoCEv2 packet to obtain a first duplicated packet;
extend the first duplicated packet based on the first backup path to obtain an extended first duplicated packet, wherein the extended first duplicated packet carries a third identifier, and the third identifier represents each network node on the first backup path; and
send the extended first duplicated packet to the second gateway device over the first backup path, so that the second gateway device performs dual fed and selective receiving processing on the extended RoCEv2 packet and the extended first duplicated packet.

20. The device according to any one of claims 13 to 18, wherein the device further comprises a backup module, configured to:
when the extended RoCEv2 packet is sent to a head network node on the network path, trigger the head network node to duplicate the extended RoCEv2 packet to obtain a second duplicated packet, wherein the second duplicated packet is sent over a second backup path, so that a tail network node on the network path performs dual fed and selective receiving processing on the extended RoCEv2 packet and the second duplicated packet, and the second backup path is triggered to be generated when the network controller receives the target request.

21. The device according to any one of claims 13 to 20, wherein the sending module is specifically configured to:
when the reserved network resource does not satisfy a network performance requirement of the extended RoCEv2 packet, perform source-end rate limiting by using a flow control mechanism, and send the extended RoCEv2 packet to the second gateway device over the network path.

22. The device according to any one of claims 13 to 21, wherein IPv4 private network addresses are deployed on the first network interface card device corresponding to the first gateway device and the second network interface card device corresponding to the second gateway device, and the obtaining module is specifically configured to:
obtain an original RoCEv2 packet to be sent to the second gateway device; and
perform IPv4 over IPv6 tunnel encapsulation on the original RoCEv2 packet to obtain the RoCEv2 packet.

23. The device according to any one of claims 13 to 21, wherein the obtaining module is specifically configured to:
receive a target packet sent by the first network interface card device, wherein the first network interface card device corresponds to the first gateway device; and
determine, based on a UDP destination port number in the target packet, that the target packet is the RoCEv2 packet.

24. The device according to any one of claims 13 to 23, wherein the reserved network resource comprises at least any one of the following:
a network bandwidth and minimum network latency.

25. A gateway device, comprising a processor and a storage, wherein the processor is coupled to the storage;
the storage is configured to store a program; and
the processor is configured to execute the program in the storage, to enable the gateway device to perform the method according to any one of claims 1 to 12.

26. A computer-readable storage medium, comprising a program, wherein when the program is run on a computer, the computer is enabled to perform the method according to any one of claims 1 to 12.

27. A computer program product comprising instructions, wherein when the computer program product is run on a computer, the computer is enabled to perform the method according to any one of claims 1 to 12.

28. A chip, wherein the chip comprises a processor and a data interface, and the processor reads, through the data interface, instructions stored in a storage, to perform the method according to any one of claims 1 to 12.
